(19) Europäisches Patentamt
European Patent Office
Office européen des brevets

(11) **EP 4 694 458 A1**

(12) **EUROPEAN PATENT APPLICATION**
published in accordance with Art. 153(4) EPC

(43) Date of publication:
**11.02.2026 Bulletin 2026/07**

(21) Application number: **24784334.5**

(22) Date of filing: **03.04.2024**

(51) International Patent Classification (IPC):
**H04W 72/0453** (2023.01)  **H04L 5/00** (2006.01)

(52) Cooperative Patent Classification (CPC):
**H04L 5/00; H04W 52/36; H04W 72/0446;**
**H04W 72/0453; H04W 72/23; H04W 72/231;**
**H04W 72/232**

(86) International application number:
**PCT/CN2024/085765**

(87) International publication number:
**WO 2024/208252 (10.10.2024 Gazette 2024/41)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **04.04.2023  CN 202310354236**

(71) Applicant: **Apogee Networks, LLC**
**Dallas, TX 75201 (US)**

(72) Inventors:
- LIU, Zheng
  **Shanghai 201206 (CN)**
- ZHANG, Xiaobo
  **Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS USED IN NODE FOR WIRELESS COMMUNICATION**

(57)   Disclosed in the present application are a method and apparatus used in a node for wireless communication. The method comprises: a node receiving a first PDCCH; and sending a first signal, wherein the first PDCCH is used for triggering the transmission of the first signal, and the first signal carries a random access preamble sequence; the first signal is associated with a cell other than the cell to which the first PDCCH belongs, the length of the time interval between the first PDCCH and the first signal in a time domain is not less than a first threshold value, and the first threshold value is greater than 0; the relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing. The present application guarantees the feasibility of implementation.

FIG. 1

## Description

### Technical Field

The present application relates to a transmission method and apparatus in a wireless communication system, in particular to a method and apparatus for uplink synchronization in wireless communication.

### Background Art

Application scenarios of wireless communication systems in the future will become more and more diversified, and different application scenarios will put forward different performance requirements for the systems. In order to meet the different performance requirements of various application scenarios, the 3GPP (3rd Generation Partner Project) RAN (Radio Access Network) #72 plenary meeting decided to study a new radio (NR) (or 5G) technology, a WI (Work Item) of the new radio (NR) technology was passed at the 3GPP RAN #75 plenary meeting, and standardization work on NR was started.

In the new radio technology, uplink synchronous transmission is one of the most basic requirements. In order to be able to adapt to various application scenarios and meet different needs, 3GPP has been evolving uplink synchronization technologies.

### Summary of the Invention

When UE (User Equipment) is moved from a coverage scope of one cell to a coverage scope of another cell, a serving cell of the UE needs to be changed, that is, it needs to be handed over from a source cell to a target cell. Existing serving cell changes are usually triggered by L3 (Layer 3) measurement, and are implemented through reconfiguration with synchronization that is triggered by RRC (Radio Resource Control) signaling. The serving cell changes implemented in an L3 have the characteristics of long delay, large signaling overhead, and long interruption time. In order to overcome the above shortcomings, a 3GPP (3rd Generation Partner Project) RAN (Radio Access Network) introduced dual connectivity (DC), conditional PSCell (Conditional PSCell (Primary SCG (Secondary Cell Group) Cell) change, CPC), conditional PSCell addition (CPA), conditional handover (CHO), and other technologies in Rel (release)-17, and these technologies are all implemented based on the L3. At the 3GPP RAN #94e plenary meeting, it was decided to start WI (Work Item) standardization work for a mobility enhancement technology based on an L1/L2 (Layer 1/Layer 2). A design goal of the mobility enhancement technology based on the L1/L2 is to implement fast handover of UE serving cells. In response to a demand for uplink synchronization in mobility enhancement in an NR system, the present application discloses a solution. It should be explained that in the description of the present application, enhancing mobility is only used as one typical application scenario or example; and designs in the present application are also applicable to other scenarios facing similar problems (such as other scenarios that require multi-cell uplink synchronization, including but not limited to multi-antenna systems, multi-TRP (transmitter receiver point) systems, capacity enhancement systems, short-range communication systems, unlicensed frequency domain communication, IoT (Internet of Things), URLLC (Ultra Reliable Low Latency Communication) networks, Internet of Vehicles, etc.), and similar technical effects can also be achieved. In addition, the use of a unified solution for different scenarios (including but not limited to multi-carrier scenarios) also helps reduce hardware complexity and costs. In case of no conflict, embodiments and features in the embodiments in a first node device of the present application can be applied to a second node device, and vice versa. In particular, the interpretation of the terminologies, nouns, functions, and variables in the present application (if not otherwise specified) can refer to definitions in 3GPP specification protocol TS36 series, TS38 series, and TS37 series.

The present application discloses a method used in a first node for wireless communication, characterized by comprising:

receiving a first PDCCH;
and sending a first signal, wherein the first PDCCH is used for triggering sending of the first signal, and the first signal carries a random access preamble sequence,
wherein the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

As one embodiment, the first threshold value is determined through a relationship between the cell associated with the first signal and the cell to which the first PDCCH belongs, thereby adjusting processing and preparation delays according to different situations between a source cell and a target cell, supporting multiple implementation modes, and reducing implementation complexity.

According to one aspect of the present application, the above method is characterized in that a switching delay parameter value is used for determining the first threshold value; when a cell associated with the first signal and a cell to which the first PDCCH belongs respectively belong to different bands, the switching delay parameter value is predefined; and when a cell associated with the first signal and a cell to which the first PDCCH belongs belong to an identical band, the switching delay parameter value is equal to a delay value of BWP switching.

As one embodiment, the switching delay parameter value is determined according to whether they are in an identical band, thereby maximizing reuse of existing designs and reducing standard complexity.

According to one aspect of the present application, the above method is characterized in that the first PDCCH is used for determining a target SSB, multiple PRACH occasions correspond to the target SSB, and a PRACH occasion occupied by the first signal is a next PRACH occasion among the multiple PRACH occasions, the length of a time interval between the next PRACH occasion and the first PDCCH in a time domain being not less than the first threshold value.

According to one aspect of the present application, the above method is characterized in that an initial delay parameter value is used for determining the first threshold value, and at least one of a frequency range to which the first signal belongs or a frequency range to which the first PDCCH belongs is used for determining the initial delay parameter value.

According to one aspect of the present application, the above method is characterized in that the first PDCCH carries a first field, a value of the first field carried by the first PDCCH belongs to a first candidate value set, and the first candidate value set comprises multiple candidate values; and the first signal being associated with a cell other than the cell to which the first PDCCH belongs depends on the value of the first field carried by the first PDCCH being equal to a candidate value other than a target value in the first candidate value set, and the target value is one predefined candidate value in the first candidate value set.

According to one aspect of the present application, the above method is characterized by comprising:

monitoring a second PDCCH in a target time window,
wherein the second PDCCH is used in response to the first signal; and the cell associated with the first signal is used for determining at least one of a duration of the target time window or a starting moment of the target time window.

According to one aspect of the present application, the above method is characterized by comprising:

receiving a first information block,
wherein the first information block is used for determining a power ramping step, the first PDCCH is used for determining a first count value, and the power ramping step and the first count value are used together for determining a transmission power value of the first signal.

The present application discloses a method used in a second node for wireless communication, characterized by comprising:

sending a first PDCCH;
and receiving a first signal, wherein the first PDCCH is used for triggering sending of the first signal, and the first signal carries a random access preamble sequence,
wherein the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

According to one aspect of the present application, the above method is characterized in that a switching delay parameter value is used for determining the first threshold value; when a cell associated with the first signal and a cell to which the first PDCCH belongs respectively belong to different bands, the switching delay parameter value is predefined; and when a cell associated with the first signal and a cell to which the first PDCCH belongs belong to an identical band, the switching delay parameter value is equal to a delay value of BWP switching.

According to one aspect of the present application, the above method is characterized in that the first PDCCH is used for determining a target SSB, multiple PRACH occasions correspond to the target SSB, and a PRACH occasion occupied by the first signal is a next PRACH occasion among the multiple PRACH occasions, the length of a time interval between the next PRACH occasion and the first PDCCH in a time domain being not less than the first threshold value.

According to one aspect of the present application, the above method is characterized in that an initial delay parameter value is used for determining the first threshold value, and at least one of a frequency range to which the first signal belongs or a frequency range to which the first PDCCH belongs is used for determining the initial delay parameter value.

According to one aspect of the present application, the above method is characterized in that the first PDCCH carries a first field, a value of the first field carried by the first PDCCH belongs to a first candidate value set, and the first candidate value set comprises multiple candidate values; and the first signal being associated with a cell other than the cell to which the first PDCCH belongs depends on the value of the first field carried by the first PDCCH being equal to a candidate value other than a target value in the first candidate value set, and the target value is one predefined candidate value in the first candidate value set.

According to one aspect of the present application, the above method is characterized by comprising:

sending a second PDCCH in a target time window;
wherein the second PDCCH is used in response to the first signal; and the cell associated with the first signal is used for determining at least one of a duration of the target time window or a starting moment of the target time window.

According to one aspect of the present application, the above method is characterized by comprising:

sending a first information block,
wherein the first information block is used for determining a power ramping step, the first PDCCH is used for determining a first count value, and the power ramping step and the first count value are used together for determining a transmission power value of the first signal.

The present application discloses a first node device used in wireless communication, characterized by comprising:

a first receiver receiving a first PDCCH;
a first transmitter sending a first signal, wherein the first PDCCH is used for triggering sending of the first signal, and the first signal carries a random access preamble sequence,
wherein the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

The present application discloses a second node device used in wireless communication, characterized by comprising:

a second transmitter sending a first PDCCH;
and a second receiver receiving a first signal, wherein the first PDCCH is used for triggering sending of the first signal, and the first signal carries a random access preamble sequence,
wherein the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

**Brief Description of the Drawings**

Other features, objects and advantages of the present application will become more apparent by reading the detailed description of non-limiting embodiments with reference to the following drawings:

FIG. 1 shows a flow chart of a first PDCCH and a first signal according to one embodiment of the present application;
FIG. 2 shows a schematic diagram of a network architecture according to one embodiment of the present application;
FIG. 3 shows a schematic diagram of a wireless protocol architecture of a user plane and a control plane according to one embodiment of the present application;

FIG. 4 shows a schematic diagram of a first node device and a second node device according to one embodiment of the present application;

FIG. 5 shows a flow chart of wireless signal transmission according to one embodiment of the present application;

FIG. 6 shows a schematic diagram of a relationship between a cell with which a first signal is associated and a cell to which the first PDCCH belongs according to one embodiment of the present application;

FIG. 7 shows a schematic diagram of a target SSB according to one embodiment of the present application;

FIG. 8 shows a schematic diagram of a relationship between a frequency range to which a first signal belongs and a frequency range to which a first PDCCH belongs according to one embodiment of the present application;

FIG. 9 shows a schematic diagram of a first candidate value set according to one embodiment of the present application;

FIG. 10 shows a schematic diagram of a target time window according to one embodiment of the present application;

FIG. 11 shows a schematic diagram of a power ramping step according to one embodiment of the present application;

FIG. 12 shows a structural block diagram of a processing device in a first node device according to one embodiment of the present application; and

FIG. 13 shows a structural block diagram of a processing device in a second node device according to one embodiment of the present application.

### Detailed Description of Embodiments

The technical solution of the present application will be further described in detail below in conjunction with the accompanying drawings. It should be noted that, in case of no conflict, embodiments and features in the embodiments of the present application can be arbitrarily combined with each other.

### Embodiment 1

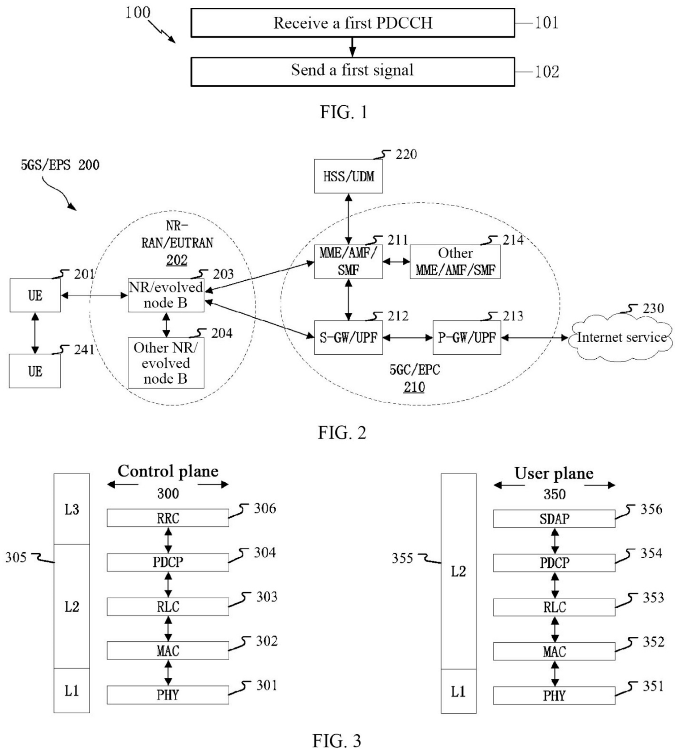

Embodiment 1 illustrates a flow chart 100 of a first PDCCH and a first signal according to one embodiment of the present application, as shown in FIG. 1. In FIG. 1, each block represents one step. It is particularly needed to emphasize that the order of various blocks in the figure does not limit a temporal order of the steps represented.

In Embodiment 1, a first node device in the present application receives the first PDCCH in step 101; the first node device in the present application sends a first signal in step 102, the first PDCCH is used for triggering sending of the first signal, and the first signal carries a random access preamble sequence; the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

As one embodiment, the first PDCCH is a baseband signal of a PDCCH (physical downlink control channel).

As one embodiment, the first PDCCH is a radio frequency signal of a PDCCH.

As one embodiment, the first PDCCH is a PDCCH order.

As one embodiment, the first PDCCH carries DCI (downlink control information) used for a PDCCH order.

As one embodiment, the first PDCCH carries all or part of fields in a DCI format 1_0.

As one embodiment, the DCI format 1_0 is used for generating the first PDCCH.

As one embodiment, a value of a frequency domain resource assignment field included in DCI carried by the first PDCCH is equal to all "1".

As one embodiment, bits of a frequency domain resource assignment field included in DCI carried by the first PDCCH are all set as "1".

As one embodiment, CRC of a DCI format of DCI carried by the first PDCCH is scrambled by a C-RNTI (Cell-Radio Network Temporary Identifier).

As one embodiment, a PDCCH candidate occupied by the first PDCCH belongs to a common search space (CSS) set.

As one embodiment, a PDCCH candidate occupied by the first PDCCH belongs to a UE specific search space (USS) set.

As one embodiment, the first signal is a PRACH (physical random access channel).

As one embodiment, the first signal is a radio frequency signal or a baseband signal of a PRACH.

As one embodiment, the first signal is used for a random access procedure.

As one embodiment, the first signal is used for an LTM (L1/L2-triggered mobility) procedure.

As one embodiment, the first signal is used for triggering a random access procedure of LTM.

As one embodiment, the technical feature of "the first PDCCH is used for triggering sending of the first signal" includes the following meaning: the first PDCCH is used for explicitly or implicitly indicating a resource occupied by the first signal.

As one embodiment, the technical feature of "the first PDCCH is used for triggering sending of the first signal" includes the following meaning: the first PDCCH is a PDCCH order for the first signal.

As one embodiment, the technical feature of "the first PDCCH is used for triggering sending of the first signal" includes the following meaning: the first PDCCH is used for explicitly or implicitly indicating a random access preamble sequence carried by the first signal.

As one embodiment, the technical feature of "the first PDCCH is used for triggering sending of the first signal" includes the following meaning: the first PDCCH is used for explicitly or implicitly indicating an index of an SS/PBCH to which the first signal is associated.

As one embodiment, the technical feature of "the first PDCCH is used for triggering sending of the first signal" includes the following meaning: the first PDCCH is used for explicitly or implicitly indicating a PRACH mask index to which the first signal corresponds.

As one embodiment, the technical feature of "the first PDCCH is used for triggering sending of the first signal" includes the following meaning: the first PDCCH is used by a sender of the first PDCCH in the present application for triggering/initiating sending of the first signal.

As one embodiment, the technical feature of "the first PDCCH is used for triggering sending of the first signal" includes the following meaning: the first PDCCH is used for explicitly or implicitly configuring or scheduling at least one parameter of the first signal.

As one embodiment, the technical feature of "the first PDCCH is used for triggering sending of the first signal" includes the following meaning: sending of the first signal is a response to the first PDCCH.

As one embodiment, the technical feature of "the first PDCCH is used for triggering sending of the first signal" includes the following meaning: the first PDCCH is used for explicitly or implicitly indicating the first node device to send the first signal.

As one embodiment, the technical feature of "the first signal carries a random access preamble sequence" includes the following meaning: the first signal is used for transmission of the random access preamble sequence.

As one embodiment, the technical feature of "the first signal carries a random access preamble sequence" includes the following meaning: the random access preamble sequence is transmitted on the first signal.

As one embodiment, the technical feature of "the first signal carries a random access preamble sequence" includes the following meaning: the random access preamble sequence is used for generating the first signal.

As one embodiment, the technical feature of "the first signal carries a random access preamble sequence" includes the following meaning: the random access preamble sequence is mapped to a physical resource assigned to the first signal.

As one embodiment, a ZC (Zadoff-Chu) sequence is used for generating a random access preamble sequence carried by the first signal.

As one embodiment, a pseudo-random sequence is used for generating a random access preamble sequence carried by the first signal.

As one embodiment, a random access preamble sequence carried by the first signal uses a preamble sequence format 0.

As one embodiment, a random access preamble sequence carried by the first signal uses a preamble sequence format 1.

As one embodiment, a random access preamble sequence carried by the first signal uses a preamble sequence format 2.

As one embodiment, a random access preamble sequence carried by the first signal uses a preamble sequence format 3.

As one embodiment, a random access preamble sequence carried by the first signal uses one of preamble sequence formats A1, A2, A3, B1, B2, B3, B4, C0, and C2.

As one embodiment, a preamble sequence format used by a random access preamble sequence carried by the first signal is configured by signaling.

As one embodiment, a sequence length of a random access preamble sequence carried by the first signal is equal to 139 or 571 or 839 or 1151.

As one embodiment, a cell to which the first PDCCH belongs is a cell transmitting the first PDCCH.

As one embodiment, a cell to which the first PDCCH belongs is a cell to which a resource occupied by the first PDCCH belongs.

As one embodiment, a cell to which the first PDCCH belongs is a cell where transmission of the first PDCCH occurs.

As one embodiment, a cell to which the first PDCCH belongs is a cell used for assigning a resource of the first PDCCH.

As one embodiment, a cell to which the first PDCCH belongs is a cell identified by a cell identifier used for determining an initial value of a scrambling code of the first PDCCH.

As one embodiment, a cell to which the first PDCCH belongs is a cell synchronized with transmission of the first PDCCH.

As one embodiment, a cell to which the first PDCCH belongs is a cell of RRC connection established when the first PDCCH is transmitted.

As one embodiment, "a cell to which the first PDCCH belongs" and "a special cell where the first node device is located when receiving the first PDCCH" are equivalent or may be used interchangeably.

As one embodiment, "a cell to which the first PDCCH belongs" and "a cell with a CU (Centralized Unit) where the first node device is located when receiving the first PDCCH" are equivalent or may be used interchangeably.

As one embodiment, "a cell to which the first PDCCH belongs" and "a cell with an RRC layer where the first node device is located when receiving the first PDCCH" are equivalent or can be used interchangeably.

As one embodiment, "a cell to which the first PDCCH belongs" and "a cell with a control surface where the first node device is located when receiving the first PDCCH" are equivalent or can be used interchangeably.

As one embodiment, "a cell to which the first PDCCH belongs" and "a cell with RRC connection with the first node device when receiving the first PDCCH" are equivalent or can be used interchangeably.

As one embodiment, "a cell to which the first PDCCH belongs" and "a cell where the first node device resides when receiving the first PDCCH" are equivalent or can be used interchangeably.

As one embodiment, "a cell to which the first PDCCH belongs" and "a source cell of LTM when receiving the first PDCCH" are equivalent or can be used interchangeably.

As one embodiment, "a cell to which the first PDCCH belongs" and "a cell where the first node device is located before handover" are equivalent or can be used interchangeably.

As one embodiment, the first signal is associated with only one cell other than a cell to which the first PDCCH belongs.

As one embodiment, the first signal is associated with multiple cells other than a cell to which the first PDCCH belongs.

As one embodiment, the first signal is associated with one cell group other than a cell to which the first PDCCH belongs.

As one embodiment, the technical features of "the first signal is associated with a cell other than a cell to which the first PDCCH belongs" and "a cell other than the cell to which the first PDCCH belongs is associated with the first signal" are equivalent or can be used interchangeably.

As one embodiment, the technical features of "the first signal is associated with a cell other than a cell to which the first PDCCH belongs" and "the first signal is associated with at least 1 cell other than the cell to which the first PDCCH belongs" are equivalent or can be used interchangeably.

As one embodiment, the technical features of "the first signal is associated with a cell other than a cell to which the first PDCCH belongs" and "the first signal is not associated with the cell to which the first PDCCH belongs" are equivalent or can be used interchangeably.

As one embodiment, the technical feature of "the first signal is associated with a cell other than a cell to which the first PDCCH belongs" includes the following meaning: a cell that configures the first signal (or assigns a resource of the first signal) and the cell to which the first PDCCH belongs are not the same.

As one embodiment, the technical feature of "the first signal is associated with a cell other than a cell to which the first PDCCH belongs" includes the following meaning: a cell that configures the first signal (or assigns a resource of the first signal) and the cell to which the first PDCCH belongs respectively belong to different TAGs (Timing Advance Groups).

As one embodiment, the technical feature of "the first signal is associated with a cell other than a cell to which the first PDCCH belongs" includes the following meaning: a cell that configures the first signal (or assigns a resource of the first signal) is a scheduled cell, and the cell to which the first PDCCH belongs is a scheduling cell.

As one embodiment, the technical feature of "the first signal is associated with a cell other than a cell to which the first PDCCH belongs" includes the following meaning: the first signal is used for at least 1 cell other than the cell to which the first PDCCH belongs.

As one embodiment, the technical feature of "the first signal is associated with a cell other than a cell to which the first PDCCH belongs" includes the following meaning: the first signal is used for obtaining a timing advance (TA) for at least 1 cell other than the cell to which the first PDCCH belongs.

As one embodiment, the technical feature of "the first signal is associated with a cell other than a cell to which the first PDCCH belongs" includes the following meaning: the first signal is associated with an index value of at least 1 cell other than the cell to which the first PDCCH belongs.

As one embodiment, the technical feature of "the first signal is associated with a cell other than a cell to which the first PDCCH belongs" includes the following meaning: the first signal is configured for at least 1 cell other than the cell to which the first PDCCH belongs, or for a cell group other than a cell group that includes the cell to which the first PDCCH belongs.

As one embodiment, the technical feature of "the first signal is associated with a cell other than a cell to which the first PDCCH belongs" includes the following meaning: a target recipient of the first signal is a network device of a cell other than the cell to which the first PDCCH belongs.

As one embodiment, the technical feature of "the first signal is associated with a cell other than a cell to which the first PDCCH belongs" includes the following meaning: a time-frequency resource and/or sequence occupied by the first signal are/is configured for a cell other than the cell to which the first PDCCH belongs.

As one embodiment, the technical feature of "the first signal is associated with a cell other than a cell to which the first PDCCH belongs" includes the following meaning: a time-frequency resource and/or sequence occupied by the first signal and an index value of at least 1 cell other than the cell to which the first PDCCH belongs are together configured.

As one embodiment, the technical feature of "the first signal is associated with a cell other than a cell to which the first PDCCH belongs" includes the following meaning: configuration information of the first signal is specific (or dedicated) to a BWP included in 1 cell other than the cell to which the first PDCCH belongs.

As one embodiment, the technical feature of "the first signal is associated with a cell other than a cell to which the first PDCCH belongs" includes the following meaning: a configuration of the first signal is included in a configuration of a BWP included in one cell other than the cell to which the first PDCCH belongs.

As one embodiment, the technical feature of "the first signal is associated with a cell other than a cell to which the first PDCCH belongs" includes the following meaning: a frequency domain resource occupied by the first signal belongs to a BWP (bandwidth part) included in 1 cell other than the cell to which the first PDCCH belongs.

As one embodiment, the technical feature of "the first signal is associated with a cell other than the cell to which the first PDCCH belongs" includes the following meaning: a time-frequency resource and/or sequence occupied by the first signal are/is configured in an IE or field for one cell or cell group other than the cell to which the first PDCCH belongs.

As one embodiment, the technical feature of "the first signal is associated with a cell other than a cell to which the first PDCCH belongs" includes the following meaning: an IE or field for one cell or cell group other than the cell to which the first PDCCH belongs is used for determining a time-frequency resource and/or sequence occupied by the first signal.

As one embodiment, the technical feature of "the first signal is associated with a cell other than a cell to which the first PDCCH belongs" includes the following meaning: an IE or field for a BWP included in one cell other than the cell to which the first PDCCH belongs is used for determining a time-frequency resource and/or sequence occupied by the first signal.

As one embodiment, the technical feature of "the first signal is associated with a cell other than a cell to which the first PDCCH belongs" includes the following meaning: a random access preamble sequence index indicated by the first PDCCH is for a cell or cell group other than the cell to which the first PDCCH belongs.

As one embodiment, the technical feature of "the first signal is associated with a cell other than a cell to which the first PDCCH belongs" includes the following meaning: an uplink carrier/supplementary uplink carrier indicator indicated by the first PDCCH is for a cell or cell group other than the cell to which the first PDCCH belongs.

As one embodiment, the technical feature of "the first signal is associated with a cell other than a cell to which the first PDCCH belongs" includes the following meaning: an SS/PBCH (synchronization signal/physical broadcast channel) index indicated by the first PDCCH is for a cell or cell group other than the cell to which the first PDCCH belongs.

As one embodiment, the technical feature of "the first signal is associated with a cell other than a cell to which the first PDCCH belongs" includes the following meaning: a PRACH mask index indicated by the first PDCCH is for a cell or cell group other than the cell to which the first PDCCH belongs.

As one embodiment, the technical feature of "the first signal is associated with a cell other than a cell to which the first PDCCH belongs" includes the following meaning: an IE or field for a BWP included in one cell other than the cell to which the first PDCCH belongs is used for determining a configuration index of the first signal.

As one embodiment, the technical feature of "the first signal is associated with a cell other than a cell to which the first PDCCH belongs" includes the following meaning: a configuration index of the first signal is configured in an IE reconfigured for an RRC of a cell or cell group other than the cell to which the first PDCCH belongs.

As one embodiment, the technical feature of "the first signal is associated with a cell other than a cell to which the first PDCCH belongs" includes the following meaning: a configuration index of the first signal is configured in a configuration IE for a cell group other than the cell to which the first PDCCH belongs.

As one embodiment, the technical feature of "the first signal is associated with a cell other than a cell to which the first PDCCH belongs" includes the following meaning: a time-frequency resource and/or sequence occupied by the first signal and an index value associated with a cell or cell group other than the cell to which the first PDCCH belongs are configured or indicated in an identical PDCCH order.

As one embodiment, the technical feature of "the first signal is associated with a cell other than a cell to which the first PDCCH belongs" includes the following meaning: sending timing of the first signal is downlink timing according to a cell other than the cell to which the first PDCCH belongs.

As one embodiment, the technical feature of "the first signal is associated with a cell other than a cell to which the first PDCCH belongs" includes the following meaning: a timing advance value of the first signal is a timing advance value of a downlink frame of one cell other than the cell to which the first PDCCH belongs.

As one embodiment, the technical feature of "the first signal is associated with a cell other than a cell to which the first PDCCH belongs" includes the following meaning: a timing advance value of the first signal for a downlink frame of one cell other than the cell to which the first PDCCH belongs is equal to 0.

As one embodiment, the technical feature of "the first signal is associated with a cell other than a cell to which the first PDCCH belongs" includes the following meaning: $N_{TA}$ of the first signal for a downlink frame of one cell other than the cell to which the first PDCCH belongs is equal to 0.

As one embodiment, the technical feature of "the first signal is associated with a cell other than a cell to which the first PDCCH belongs" includes the following meaning: $N_{TA}$ of an uplink frame to which the first signal belongs in a time domain for a downlink frame with an identical frame number in a cell other than the cell to which the first PDCCH belongs is equal to 0.

As one embodiment, the technical feature of "the first signal is associated with a cell other than a cell to which the first PDCCH belongs" includes the following meaning: configuration information of the first signal and an index (or identifier) of one cell or cell group other than the cell to which the first PDCCH belongs are configured in an identical IE or field.

As one embodiment, the technical feature of "the first signal is associated with a cell other than a cell to which the first PDCCH belongs" includes the following meaning: the first PDCCH is a PDCCH order of LTM.

As one embodiment, the technical feature of "the first signal is associated with a cell other than a cell to which the first PDCCH belongs" includes the following meaning: a value of the first field in the present application carried by the first PDCCH is equal to a candidate value other than the target value in the first candidate value set in the present application.

As one embodiment, an association relationship between the first signal and a cell other than a cell to which the first PDCCH belongs is configured or predefined.

As one embodiment, the first PDCCH is used for indicating that the first signal is associated with a cell or cell group other than a cell to which the first PDCCH belongs.

As one embodiment, the first PDCCH is used for indicating that the first signal is associated with a cell or cell other than a cell to which the first PDCCH belongs, and the first PDCCH is used for indicating that the first signal is associated with an associated cell or cell.

As one embodiment, one field in a DCI format carried by the first PDCCH is used for explicitly or implicitly indicating that the first signal is associated with a cell or cell other than a cell to which the first PDCCH belongs, and one field in the DCI format carried by the first PDCCH is used for explicitly or implicitly indicating that the first signal is associated with an associated cell or cell.

As one embodiment, one RRC layer IE is used for explicitly or implicitly indicating that the first signal is associated with a cell or cell other than a cell to which the first PDCCH belongs, and this RRC layer IE is used for explicitly or implicitly indicating that the first signal is associated with an associated cell or cell.

As one embodiment, the first information block in the present application is used for explicitly or implicitly indicating that the first signal is associated with a cell or cell other than a cell to which the first PDCCH belongs, and the first information block in the present application is used for explicitly or implicitly indicating that the first signal is associated with an associated cell or cell.

As one embodiment, an IE other than the first information block in the present application is used for explicitly or implicitly indicating that the first signal is associated with a cell or cell other than a cell to which the first PDCCH belongs, and an IE other than the first information block in the present application is used for explicitly or implicitly indicating that the first signal is associated with an associated cell or cell.

As one embodiment, a latest symbol of reception of the first PDCCH is not later than an earliest symbol of transmission of the first signal.

As one embodiment, a latest symbol of reception of the first PDCCH is earlier than an earliest symbol of transmission of the first signal.

As one embodiment, a length of a time interval between the first PDCCH and the first signal in a time domain is the length of a time interval between the latest symbol of reception of the first PDCCH and the earliest symbol of transmission of the first signal.

As one embodiment, a length of a time interval between the first PDCCH and the first signal in a time domain is a time domain delay between the first PDCCH and the first signal.

As one embodiment, a length of a time interval between the first PDCCH and the first signal in a time domain is the length of a time interval between an ending moment of the latest symbol of reception of the first PDCCH and a starting moment of the earliest symbol of transmission of the first signal.

As one embodiment, a length of a time interval between the first PDCCH and the first signal in a time domain is a length of a time interval between a starting moment of a latest symbol of reception of the first PDCCH and a starting moment of an earliest symbol of transmission of the first signal.

As one embodiment, the length of a time interval between the first PDCCH and the first signal in a time domain is the length of a time interval between the end moment of the latest symbol of reception of the first PDCCH and the end moment of the earliest symbol of transmission of the first signal.

As one embodiment, the unit of the length of the time interval between the first PDCCH and the first signal in a time domain is millisecond (ms).

As one embodiment, the length of the time interval between the first PDCCH and the first signal in a time domain is expressed by a number of symbols.

As one embodiment, the length of the time interval between the first PDCCH and the first signal in a time domain is expressed by an absolute time.

As one embodiment, the unit of the first threshold value is millisecond.

As one embodiment, the first threshold value is expressed by an absolute time.

As one embodiment, the first threshold value is expressed by a number of symbols.

As one embodiment, a length of a time interval between the first PDCCH and the first signal in a time domain is greater than or equal to the first threshold value.

As one embodiment, the first threshold value is a lower limit value of a length of a time interval between the first PDCCH and the first signal in a time domain.

As one embodiment, "a cell associated with the first signal" and "one cell associated with the first signal" are equivalent or can be used interchangeably.

As one embodiment, "a cell associated with the first signal" and "one cell group associated with the first signal" are equivalent or can be used interchangeably.

As one embodiment, "a cell associated with the first signal" and "at least one cell associated with the first signal" are equivalent or can be used interchangeably.

As one embodiment, "a cell associated with the first signal" and "one cell included in one cell group associated with the first signal" are equivalent or can be used interchangeably.

As one embodiment, a cell associated with the first signal is a cell corresponding to the first signal or one cell in a cell group corresponding to the first signal.

As one embodiment, a cell associated with the first signal is a cell targeted by the first signal or one cell in a cell group targeted by the first signal.

As one embodiment, a cell associated with the first signal is a cell or cell group that uses the first signal to obtain timing advance.

As one embodiment, a cell associated with the first signal is a cell or cell group where a corresponding index value or identifier value (ID) is associated with the first signal.

As one embodiment, a cell associated with the first signal is a target reception cell of the first signal.

As one embodiment, a cell associated with the first signal is a cell or cell group where a corresponding index value or identifier value and a time-frequency resource and/or sequence occupied by the first signal are configured together.

As one embodiment, a cell associated with the first signal is a cell or cell group where a corresponding index value or identifier value and a time-frequency resource and/or sequence occupied by the first signal are configured or indicated in the first PDCCH.

As one embodiment, a cell associated with the first signal is a cell referred by sending timing of the first signal.

As one embodiment, a cell associated with the first signal is a cell to which a downlink frame referred by a timing advance value of the first signal belongs.

As one embodiment, a cell associated with the first signal is a cell to which a downlink frame referred by a timing advance value of the first signal equal to 0 belongs.

As one embodiment, a cell associated with the first signal is a cell to which an SSB associated with the first signal belongs.

As one embodiment, a cell associated with the first signal is a cell indicated by an SSB associated with the first signal.

As one embodiment, a cell associated with the first signal is a cell to which a downlink frame targeted by N_TA of the first signal belongs.

As one embodiment, a cell associated with the first signal is a cell to which an uplink frame to which the first signal belongs and a downlink frame with an identical frame number in a time domain and with N_TA equal to 0 belong.

As one embodiment, a relationship between a cell associated with the first signal and a cell to which the first PDCCH belongs includes: whether the cell associated with the first signal and the cell to which the first PDCCH belongs belong to an identical cell group (CG).

As one embodiment, a relationship between a cell associated with the first signal and a cell to which the first PDCCH belongs includes: whether the cell associated with the first signal and the cell to which the first PDCCH belongs belong to an identical timing advance group (TAG).

As one embodiment, a relationship between a cell associated with the first signal and a cell to which the first PDCCH belongs includes: whether the cell associated with the first signal and the cell to which the first PDCCH belongs are intra-frequency cells or inter-frequency cells.

As one embodiment, a relationship between a cell associated with the first signal and a cell to which the first PDCCH belongs includes: whether the cell associated with the first signal and the cell to which the first PDCCH belongs belong to an identical band.

As one embodiment, a relationship between a cell associated with the first signal and a cell to which the first PDCCH belongs includes: whether the cell associated with the first signal and the cell to which the first PDCCH belongs are intra-band cells or inter-band cells.

As one embodiment, a relationship between a cell associated with the first signal and a cell to which the first PDCCH belongs includes: whether the cell associated with the first signal and the cell to which the first PDCCH belongs are both serving cells.

As one embodiment, a relationship between a cell associated with the first signal and a cell to which the first PDCCH belongs includes: whether the cell associated with the first signal and the cell to which the first PDCCH belongs are both active cells.

As one embodiment, a relationship between a cell associated with the first signal and a cell to which the first PDCCH belongs includes: whether the cell associated with the first signal and the cell to which the first PDCCH belongs are in an identical frequency range (FR).

As one embodiment, a relationship between a cell associated with the first signal and a cell to which the first PDCCH belongs includes: whether the cell associated with the first signal and the cell to which the first PDCCH belongs use an identical duplex mode.

As one embodiment, a relationship between a cell associated with the first signal and a cell to which the first PDCCH belongs includes: in calculation for the first threshold value, a frequency range to which the cell associated with the first signal belongs is deemed to be a frequency range to which the cell associated with the first signal and the cell to which the first PDCCH belongs belong.

As one embodiment, a relationship between a cell associated with the first signal and a cell to which the first PDCCH belongs refers to: a frequency range to which the cell associated with the first signal belongs.

As one embodiment, a relationship between a cell associated with the first signal and a cell to which the first PDCCH belongs refers to: a frequency range to which the cell to which the first PDCCH belongs belongs.

As one embodiment, a relationship between a cell associated with the first signal and a cell to which the first PDCCH belongs refers to: a frequency range to which the cell associated with the first signal belongs and a frequency range to which the cell to which the first PDCCH belongs belongs.

As one embodiment, the technical feature of "a relationship between the cell associated with the first signal and the cell to which the first PDCCH belongs is used for determining the first threshold value" includes the following meaning: the relationship between the cell associated with the first signal and the cell to which the first PDCCH belongs is used by the first node device in the present application for determining the first threshold value.

As one embodiment, the technical feature of "a relationship between the cell associated with the first signal and the cell to which the first PDCCH belongs is used for determining the first threshold value" includes the following meaning: the relationship between the cell associated with the first signal and the cell to which the first PDCCH belongs is used for calculating the first threshold value.

As one embodiment, the technical feature of "a relationship between the cell associated with the first signal and the cell to which the first PDCCH belongs is used for determining the first threshold value" includes the following meaning: the relationship between the cell associated with the first signal and the cell to which the first PDCCH belongs is used for determining a value of at least one component included in the first threshold value.

As one embodiment, the technical feature of "a relationship between the cell associated with the first signal and the cell to which the first PDCCH belongs is used for determining the first threshold value" includes the following meaning: the relationship between the cell associated with the first signal and the cell to which the first PDCCH belongs is used for determining a value of at least one parameter used when the first threshold value is calculated.

As one embodiment, the technical feature of "a relationship between the cell associated with the first signal and the cell to which the first PDCCH belongs is used for determining the first threshold value" includes the following meaning: an initial delay parameter value is used for determining the first threshold value, and at least one of a frequency range to which the first signal belongs or a frequency range to which the first PDCCH belongs is used for determining the initial delay parameter value.

As one embodiment, the technical feature of "a relationship between a cell associated with the first signal and a cell to which the first PDCCH belongs is used for determining the first threshold value" includes the following meaning: a target parameter value is used for determining the first threshold value; when a relationship between the first cell and the cell to which the first PDCCH belongs is a first relationship, the target parameter value is equal to a first candidate value; and when the relationship between the first cell and the cell to which the first PDCCH belongs is a second relationship, the target parameter value is equal to a second candidate value.

- As one subsidiary embodiment of the above embodiment, the first candidate value and the second candidate value are unequal, the first candidate value is predefined or configurable, or is related to the capability of the first node device; and the second candidate value is predefined or configurable, or is related to the capability of the first node device.
- As one subsidiary embodiment of the above embodiment, "a target parameter value is used for determining the first threshold value" includes: the target parameter value is a value of one parameter used when the first threshold value is calculated.
- As one subsidiary embodiment of the above embodiment, "a target parameter value is used for determining the first threshold value" includes: the first threshold value and the target parameter value are linearly correlated.
- As one subsidiary embodiment of the above embodiment, a target parameter value is a value of a parameter other than a parameter $N_{T,2}$, a parameter $\Delta_{BWPSwitching}$, a parameter $\Delta_{Delay}$, or a parameter $T_{switch}$.
- As one subsidiary embodiment of the above embodiment, a target parameter value is one of a parameter $N_{T,2}$, a parameter $\Delta_{BWPSwitching}$, a parameter $\Delta_{Delay}$, or a parameter $T_{switch}$.
- As one subsidiary embodiment of the above embodiment, the relationship between the cell associated with the first signal and the cell to which the first PDCCH belongs is only one of the first relationship or the second relationship.
- As one subsidiary embodiment of the above embodiment, the relationship between the cell associated with the first signal and the cell to which the first PDCCH belongs may also be a relationship other than the first relationship or the second relationship.
- As one subsidiary embodiment of the above embodiment, the first relationship and the second relationship are not the same.
- As one subsidiary embodiment of the above embodiment, the first relationship refers to: the cell associated with the first signal and the cell to which the first PDCCH belongs are respectively a secondary cell and a primary cell; and the second relationship refers to: the first cell is a non-serving cell, and the cell to which the first PDCCH belongs is a serving cell.
- As one subsidiary embodiment of the above embodiment, the first relationship refers to: the cell associated with the first signal and the cell to which the first PDCCH belongs belong to an identical TAG; and the second relationship refers to: the first cell and the cell to which the first PDCCH belongs respectively belong to different TAGs.
- As one subsidiary embodiment of the above embodiment, the first relationship refers to: the cell associated with the first signal and the cell to which the first PDCCH belongs are intra-frequency; and the second relationship refers to: the cell associated with the first signal and the cell to which the first PDCCH belongs are inter-frequency.
- As one subsidiary embodiment of the above embodiment, the first relationship refers to: the cell associated with the first signal and the cell to which the first PDCCH belongs belong to an identical cell group; and the second relationship refers to: the cell associated with the first signal and the cell to which the first PDCCH belongs respectively belong to different cell groups.
- As one subsidiary embodiment of the above embodiment, the first relationship refers to: the cell associated with the first signal and the cell to which the first PDCCH belongs belong to an identical cell group, and the cell associated with the first signal and the cell to which the first PDCCH belongs are respectively a secondary cell and a primary cell; and the second relationship refers to: the cell associated with the first signal and the cell to which the first PDCCH belongs belong to an identical cell group, and the cell associated with the first signal is a non-serving cell, while the cell to which the first PDCCH belongs is a serving cell.
- As one subsidiary embodiment of the above embodiment, the first relationship refers to: the cell associated with the first signal and the cell to which the first PDCCH belongs belong to an identical frequency range (FR); and the second relationship refers to: the cell associated with the first signal and the cell to which the first PDCCH belongs respectively belong to different frequency ranges.
- As one subsidiary embodiment of the above embodiment, the first relationship refers to: the cell associated with the first signal belongs to a frequency range 1 (FR1); and the second relationship refers to: the cell associated with the first signal belongs to a frequency range 2 (FR2).
- As one subsidiary embodiment of the above embodiment, the first relationship refers to: the cell to which the first PDCCH belongs belongs to a frequency range 1 (FR1); and the second relationship refers to: the cell to which the first PDCCH belongs belongs to a frequency range 2 (FR2).
- As one subsidiary embodiment of the above embodiment, the first relationship refers to: the cell associated with the first signal and the cell to which the first PDCCH belongs respectively belong to different bands (inter-bands); and the second relationship refers to: the cell associated with the first signal and the cell to which the first PDCCH belongs belong to an identical band (intra-band).

As one embodiment, the technical feature of "a relationship between the cell associated with the first signal and the cell to which the first PDCCH belongs is used for determining the first threshold value" includes the following meaning: when the relationship between the cell associated with the first signal and the cell to which the first PDCCH belongs is a first relationship, the first threshold value is equal to a first candidate value; and when the relationship between the cell associated with the first signal and the cell to which the first PDCCH belongs is a second relationship, the first threshold value is equal to a sum (or difference) between the first candidate value and a first offset value.

- As one subsidiary embodiment of the above embodiment, the first candidate value is predefined or configurable or is related to the capability of the first node device, and the first offset value is predefined or configurable or is related to the capability of the first node device.
- As one subsidiary embodiment of the above embodiment, the first offset value is a value of a parameter other than a parameter $N_{T,2}$, a parameter $\Delta_{BWPSwitching}$, a parameter $\Delta_{Delay}$, or a parameter $T_{switch}$.
- As one subsidiary embodiment of the above embodiment, the relationship between the cell associated with the first signal and the cell to which the first PDCCH belongs is only one of the first relationship or the second relationship.
- As one subsidiary embodiment of the above embodiment, the relationship between the cell associated with the first signal and the cell to which the first PDCCH belongs may also be a relationship other than the first relationship or the second relationship.
- As one subsidiary embodiment of the above embodiment, the first relationship and the second relationship are not the same.
- As one subsidiary embodiment of the above embodiment, the first relationship refers to: the cell associated with the first signal and the cell to which the first PDCCH belongs are respectively a secondary cell and a primary cell; and the second relationship refers to: the first cell is a non-serving cell, and the cell to which the first PDCCH belongs is a serving cell.
- As one subsidiary embodiment of the above embodiment, the first relationship refers to: the cell associated with the first signal and the cell to which the first PDCCH belongs belong to an identical TAG; and the second relationship refers to: the first cell and the cell to which the first PDCCH belongs respectively belong to different TAGs.
- As one subsidiary embodiment of the above embodiment, the first relationship refers to: the cell associated with the first signal and the cell to which the first PDCCH belongs are intra-frequency; and the second relationship refers to: the cell associated with the first signal and the cell to which the first PDCCH belongs are inter-frequency.
- As one subsidiary embodiment of the above embodiment, the first relationship refers to: the cell associated with the first signal and the cell to which the first PDCCH belongs belong to an identical cell group; and the second relationship refers to: the cell associated with the first signal and the cell to which the first PDCCH belongs respectively belong to different cell groups.
- As one subsidiary embodiment of the above embodiment, the first relationship refers to: the cell associated with the first signal and the cell to which the first PDCCH belongs belong to an identical cell group, and the cell associated with the first signal and the cell to which the first PDCCH belongs are respectively a secondary cell and a primary cell; and the second relationship refers to: the cell associated with the first signal and the cell to which the first PDCCH belongs belong to an identical cell group, and the cell associated with the first signal is a non-serving cell, while the cell to which the first PDCCH belongs is a serving cell.
- As one subsidiary embodiment of the above embodiment, the first relationship refers to: the cell associated with the first signal and the cell to which the first PDCCH belongs belong to an identical frequency range (FR); and the second relationship refers to: the cell associated with the first signal and the cell to which the first PDCCH belongs respectively belong to different frequency ranges.
- As one subsidiary embodiment of the above embodiment, the first relationship refers to: the cell associated with the first signal belongs to a frequency range 1 (FR1); and the second relationship refers to: the cell associated with the first signal belongs to a frequency range 2 (FR2).
- As one subsidiary embodiment of the above embodiment, the first relationship refers to: the cell to which the first PDCCH belongs belongs to a frequency range 1 (FR1); and the second relationship refers to: the cell to which the first PDCCH belongs belongs to a frequency range 2 (FR2).
- As one subsidiary embodiment of the above embodiment, the first relationship refers to: the cell associated with the first signal and the cell to which the first PDCCH belongs respectively belong to different bands (inter-bands); and the second relationship refers to: the cell associated with the first signal and the cell to which the first PDCCH belongs belong to an identical band (intra-band).

As one embodiment, the technical feature of "a relationship between the cell associated with the first signal and the cell to which the first PDCCH belongs is used for determining the first threshold value" includes the following meaning: the relationship between the cell associated with the first signal and the cell to which the first PDCCH belongs is used for determining a value of a parameter $N_{T,2}$ used when the first threshold value is calculated.

As one embodiment, the technical feature of "a relationship between the cell associated with the first signal and the cell to which the first PDCCH belongs is used for determining the first threshold value" includes the following meaning: the relationship between the cell associated with the first signal and the cell to which the first PDCCH belongs is used for determining a value of a parameter $\Delta_{BWPSwitching}$ used when the first threshold value is calculated.

As one embodiment, the technical feature of "a relationship between the cell associated with the first signal and the cell to which the first PDCCH belongs is used for determining the first threshold value" includes the following meaning: the relationship between the cell associated with the first signal and the cell to which the first PDCCH belongs is used for determining a value of a parameter $\Delta_{Delay}$ used when the first threshold value is calculated.

As one embodiment, the technical feature of "a relationship between the cell associated with the first signal and the cell to which the first PDCCH belongs is used for determining the first threshold value" includes the following meaning: the relationship between the cell associated with the first signal and the cell to which the first PDCCH belongs is used for determining a value of a parameter $T_{switch}$ used when the first threshold value is calculated.

As one embodiment, the technical feature of "a relationship between the cell associated with the first signal and the cell to which the first PDCCH belongs is used for determining the first threshold value" includes the following meaning: the relationship between the cell associated with the first signal and the cell to which the first PDCCH belongs is used for determining a value of a parameter $\Delta_{LTM}$ used when the first threshold value is calculated, and the parameter $\Delta_{LTM}$ is a value of a parameter other than a parameter $N_{T,2}$, a parameter $\Delta_{BWPSwitching}$, a parameter $\Delta_{Delay}$, or a parameter $T_{switch}$

As one embodiment, the first sub-carrier spacing is equal to one of 15 kHz, 30 kHz, and 60 kHz.

As one embodiment, the first sub-carrier spacing is equal to one of 15 kHz, 30 kHz, 60 kHz, and 120 kHz.

As one embodiment, the first sub-carrier spacing is equal to one of 15 kHz, 30 kHz, 60 kHz, 120 kHz, 480 kHz, and 960 kHz.

As one embodiment, the first sub-carrier spacing is equal to one of sub-carrier spacings supported by the FR1.

As one embodiment, the first sub-carrier spacing is equal to one of sub-carrier spacings supported by the FR2.

As one embodiment, the technical feature of "the first threshold value is related to a first sub-carrier spacing" includes the following meaning: the first sub-carrier spacing is used for determining or calculating the first threshold value.

As one embodiment, the technical feature of "the first threshold value is related to a first sub-carrier spacing" includes the following meaning: the first sub-carrier spacing is used for determining or calculating a value of at least one component included in the first threshold value.

As one embodiment, the technical feature of "the first threshold value is related to a first sub-carrier spacing" includes the following meaning: the first sub-carrier spacing is used for determining a value of at least one parameter used when the first threshold value is calculated.

As one embodiment, the technical feature of "the first threshold value is related to the first sub-carrier spacing" includes the following meaning: the first threshold value and a preparation delay parameter value are linearly correlated, and the first sub-carrier spacing is used for determining the preparation delay parameter value.

As one embodiment, the technical feature of "the first threshold value is related to a first sub-carrier spacing" includes the following meaning: the first threshold value and a preparation delay parameter value are linearly correlated, and the preparation delay parameter value is equal to a duration of N2 symbols; the first sub-carrier spacing is one of Q1 candidate sub-carrier spacings, N2 is one of Q1 candidate number values, the Q1 candidate sub-carrier spacings and the Q1 candidate number values are in one-to-one correspondence, and Q1 is a positive integer greater than 1; N2 is equal to a candidate number value corresponding to the first sub-carrier spacing among the Q1 candidate values, any one of the Q1 candidate values is a positive integer, and Q1 is a positive integer greater than 1.

- As one subsidiary embodiment of the above embodiment, a duration of each of the N2 symbols is equal to the duration of one short cyclic prefix (CP) symbol.
- As one subsidiary embodiment of the above embodiment, a duration of each of the N2 symbols is equal to $(2048 + 144) \cdot 64 \cdot 2^{-\mu} \cdot T_C$ milliseconds, wherein $T_C = 1/(480000*4096)$ seconds, and $\mu$ is an index of the first sub-carrier spacing.
- As one subsidiary embodiment of the above embodiment, a duration of each of the N2 symbols is equal to a duration (including a CP) of a symbol other than a first symbol or a $7 \cdot 2^{-\mu} + 1$-th symbol in a subframe, and $\mu$ is an index of the first sub-carrier spacing.
- As one subsidiary embodiment of the above embodiment, a duration of each of the N2 symbols is equal to a duration (including a CP) of a symbol other than a first symbol in a half-subframe.
- As one subsidiary embodiment of the above embodiments, a one-to-one correspondence relationship between the Q1 candidate sub-carrier spacings and the Q1 candidate number values is predefined or configurable, or is related to the capability of the first node device.
- As one subsidiary embodiment of the above embodiment, the preparation delay parameter value is a value of a parameter $N_{T,2}$.

As one embodiment, the technical feature of "the first threshold value is related to a first sub-carrier spacing" includes the following meaning: the first threshold value and a preparation delay parameter value are linearly correlated, the first sub-carrier spacing corresponds to the preparation delay parameter value, and a correspondence relationship between the first sub-carrier spacing and the target delay parameter value is predefined or configurable, or is related to the capability of the first node device.

As one embodiment, a sub-carrier spacing of the first PDCCH is a sub-carrier spacing of sub-carriers occupied by the first PDCCH in a frequency domain.

As one embodiment, a sub-carrier spacing of the first PDCCH is a sub-carrier spacing in which a BWP to which a frequency domain resource occupied by the first PDCCH belongs is configured.

As one embodiment, a sub-carrier spacing of the first PDCCH is a sub-carrier spacing in which a BWP to which the first PDCCH belongs in a frequency domain is configured.

As one embodiment, a sub-carrier spacing of the first PDCCH is equal to one of 15 kHz, 30 kHz, 60 kHz, 120 kHz, 480 kHz, and 960 kHz.

As one embodiment, a sub-carrier spacing of the first PDCCH is related to a frequency range of a cell to which the first PDCCH belongs.

As one embodiment, a sub-carrier spacing of the first PDCCH is configured by signaling.

As one embodiment, a sub-carrier spacing of the first signal is a sub-carrier spacing of sub-carriers occupied by the first signal in a frequency domain.

As one embodiment, a sub-carrier spacing of the first signal is equal to one of 1.25 kHz, 5 kHz, 15 kHz, 30 kHz, 60 kHz, 120 kHz, 480 kHz, and 960 kHz.

As one embodiment, a sub-carrier spacing of the first signal is related to a frequency range of a cell associated with the first signal.

As one embodiment, a sub-carrier spacing of the first signal is configured by signaling.

As one embodiment, a sub-carrier spacing of the first signal is related to a format used by the first signal.

As one embodiment, the technical feature of "a sub-carrier spacing of the first PDCCH and a sub-carrier spacing of the first signal are used together for determining the first sub-carrier spacing" includes the following meaning: the sub-carrier spacing of the first PDCCH and the sub-carrier spacing of the first signal are used together by the first node device in the present application for determining the first sub-carrier spacing.

As one embodiment, the technical feature of "a sub-carrier spacing of the first PDCCH and a sub-carrier spacing of the first signal are used together for determining the first sub-carrier spacing" includes the following meaning: the first sub-carrier spacing is equal to a smaller value of the sub-carrier spacing of the first PDCCH and the sub-carrier spacing of the first signal.

As one embodiment, the technical feature of "a sub-carrier spacing of the first PDCCH and a sub-carrier spacing of the first signal are used together for determining the first sub-carrier spacing" includes the following meaning: the first threshold value and a preparation delay parameter value are linearly correlated, and the first sub-carrier spacing is equal to a sub-carrier spacing in the sub-carrier spacing of the first PDCCH and the sub-carrier spacing of the first signal that can obtain the greater preparation delay parameter value.

As one embodiment, the technical feature of "a sub-carrier spacing of the first PDCCH and a sub-carrier spacing of the first signal are used together for determining the first sub-carrier spacing" includes the following meaning: when the sub-carrier spacing of the first signal is equal to 1.25 kHz or 5 kHz, the first sub-carrier spacing is equal to 15 kHz; and when the sub-carrier spacing of the first signal is equal to a sub-carrier spacing other than 1.25 kHz or 5 kHz, the first sub-carrier spacing is equal to a smaller value of the sub-carrier spacing of the first PDCCH and the sub-carrier spacing of the first signal.

As one embodiment, the technical feature of "a sub-carrier spacing of the first PDCCH and a sub-carrier spacing of the first signal are used together for determining the first sub-carrier spacing" includes the following meaning: when the sub-carrier spacing of the first signal is less than 15 kHz, the first sub-carrier spacing is equal to 15 kHz; otherwise, the first sub-carrier spacing is equal to a smaller value between the sub-carrier spacing of the first PDCCH and the sub-carrier spacing of the first signal.

## Embodiment 2

Embodiment 2 illustrates a schematic diagram of one network architecture according to the present application, as shown in FIG. 2. FIG. 2 illustrates a diagram of a network architecture 200 of 5G NR, LTE (Long-Term Evolution) and LTE-A (Long-Term Evolution Advanced) systems. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown in the figure, the 5GS/EPS provides packet switching services, but those skilled in the art will readily understand that various concepts presented throughout the present application can be extended to networks that provide circuit switching services or other cellular networks. The NG-RAN comprises an NR/Evolved Node B(gNB/eNB)203 and other gNB(eNB)204. The gNB(eNB)203 provides user and control plane protocol termination towards the UE201. The gNB(eNB)203 may be connected to the other gNB(eNB)204 via an Xn/X2 interface (e.g., backhaul). The gNB(eNB)203 may also be referred to as a base station, a base transceiver station, a radio base station, a radio transceiver, a transceiver function, a basic service set (BSS), an extended service set (ESS), a TRP (transmitter receiver point), or some other suitable terminologies. The gNB(eNB)203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB(eNB)203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet service 230. The Internet service 230 comprises an operator's corresponding Internet protocol service, which may specifically include the Internet, the intranet, an IMS (IP Multimedia Subsystem), and a packet switching streaming service.

As one embodiment, the UE201 corresponds to the first node device in the present application.

As one embodiment, the gNB(eNB)201 corresponds to the second node device in the present application.

## Embodiment 3

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture of the control plane 300 for a first node device (UE or a gNB) and a second node device (a gNB or UE) using three layers: Layer 1, Layer 2, and Layer 3. The Layer 1 (L1 layer) is the lowest layer and implements various PHY (physical layer) signal processing functions. The L1 layer will be referred to as PHY301 herein. The Layer 2 (L2 layer) 305 is above the PHY301, and is responsible for a link between the first node device and the second node device through the PHY301. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the second node device. The PDCP sublayer 304 provides multiplexing between different radio bearers and logical channels. The PDCP sublayer 304 also provides security by encrypting data packets, and provides handover support on the first node device between the second node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for assigning various radio resources (e.g., resource blocks) in one cell between the first node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling between the second node device and the first node device. The radio protocol architecture for the user plane 350 comprises the Layer 1 (L1 layer) and the Layer 2 (L2 layer). The radio protocol architecture for the first node device and the second node device in the user plane 350 is substantially the same as that for corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first node device may have several upper layers above the L2 layer 355, comprising a network layer (e.g., an IP layer) terminating at a P-GW on a network side and an application layer terminating at the other end (e.g., remote UE, a server, etc.) of connection.

As one embodiment, the radio protocol architecture in FIG. 3 is applicable to the first node device in the present application.

As one embodiment, the radio protocol architecture in FIG. 3 is applicable to the second node device in the present application.

**Embodiment 4**

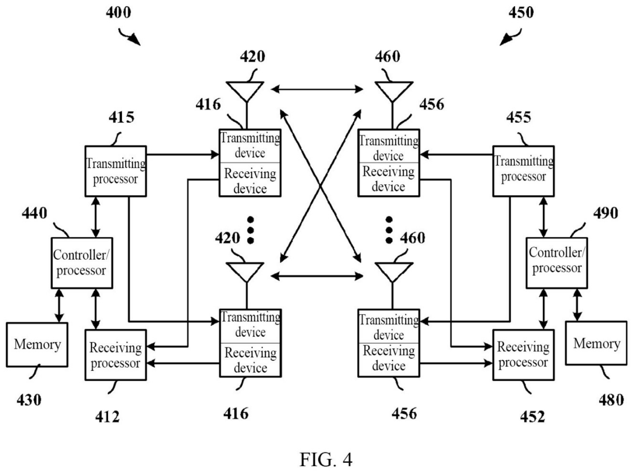

Embodiment 4 shows a schematic diagram of a first node device and a second node device according to one embodiment of the present application, as shown in FIG. 4.

The first node device (450) may comprise a controller/processor 490, a data source/buffer 480, a receiving processor 452, a transmitting device/receiving device 456, and a transmitting processor 455, and the transmitting device/receiving device 456 comprises an antenna 460.

The second node device (410) may comprise a controller/processor 440, a data source/buffer 430, a receiving processor 412, a transmitting device/receiving device 416, and a transmitting processor 415, and the transmitting device/receiving device 416 comprises an antenna 420.

In a DL (Downlink), an upper-layer packet, such as high-layer information comprised in a first information block in the present application, is provided to the controller/processor 440. The controller/processor 440 implements functions of the L2 layer and layers above it. In the DL, the controller/processor 440 provides packet header compression, encryption, packet segmentation and reordering, multiplexing between logical and transport channels, and radio resource assignment to the first node device 450 based on various priority metrics. The controller/processor 440 is also responsible for HARQ operations, retransmission of lost packets, and signaling to the first node device 450, such as the generation of the high-layer information comprised in the first information block in the present application in the controller/processor 440. The transmitting processor 415 implements various signal processing functions for the L1 layer (i.e., the physical layer), comprising coding, interleaving, scrambling, modulation, power control/assignment, precoding, and physical layer control signaling generation, etc. For example, generation of a physical layer signal carrying a first information block in the present application, and physical layer signals corresponding to a first PDCCH and a second PDCCH is completed at the transmitting processor 415. Generated modulation symbols are divided into parallel streams, and each stream is mapped to a corresponding multi-carrier sub-carrier and/or multi-carrier symbol, which is then mapped to the antenna 420 by the transmitting processor 415 via the transmitting device 416 to be transmitted in a form of a radio frequency signal. At a receiving end, each receiving device 456 receives a radio frequency signal through its corresponding antenna 460, and each receiving device 456 recovers baseband information modulated onto a radio frequency carrier and provides the baseband information to the receiving processor 452. The receiving processor 452 implements various signal reception processing functions of the L1 layer. The signal reception and processing functions comprise reception of a physical layer signal carrying a first information block in the present application, a first PDCCH, and a second PDCCH, demodulation based on various modulation schemes (for example, binary phase shift keying (BPSK), and quadrature phase shift keying (QPSK)) through multi-carrier symbols in a multi-carrier symbol stream, followed by descrambling, decoding and deinterleaving to recover data or control transmitted by the second node device 410 on a physical channel, and then the data and control signals are provided to the controller/processor 490. The controller/processor 490 is responsible for the L2 layer and above, and the controller/processor 490 interprets the high-layer information comprised in the first information block in the present application. The controller/processor may be associated with a memory 480 storing a program code and data. The memory 480 may be referred to as a computer-readable medium.

In uplink (UL) transmission, similar to downlink transmission, high-layer information is generated at the controller/processor 490 and then is implemented by the transmitting processor 455 for various signal transmission processing functions for the L1 layer (i.e., the physical layer), comprising generation of a first signal is completed at the transmitting processor 455, and then the first signal is mapped to the antenna 460 by the transmitting processor 455 via the transmitting device 456 and is transmitted in a form of a radio frequency signal. The receiving device 416 receives a radio frequency signal through its corresponding antenna 420, and each receiving device 416 recovers baseband information modulated on a radio frequency carrier and provides the baseband information to the receiving processor 412. The receiving processor 412 implements various signal receiving processing functions for the L1 layer (i.e., the physical layer), comprising receiving and processing a first signal, and then providing data and/or control signals to the controller/processor 440. Functions of the L2 layer implemented at the controller/processor 440 comprise interpretation of high-layer information. The controller/processor may be associated with a buffer 430 storing a program code and data. The buffer 430 may be a computer-readable medium.

As one embodiment, the first node device 450 apparatus comprises: at least one processor and at least one memory, the at least one memory comprising a computer program code; the at least one memory and the computer program code are configured to be used together with the at least one processor, and the first node device 450 apparatus at least: receives a first PDCCH; and sends a first signal, wherein the first PDCCH is used for triggering sending of the first signal, and the first signal carries a random access preamble sequence, wherein the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

As one embodiment, the first node device 450 apparatus comprises: a memory storing a computer-readable instruction program, the computer-readable instruction program generates actions when executed by at least one processor, and the actions comprise: receiving a first PDCCH; and sending a first signal, wherein the first PDCCH is used for triggering sending of the first signal, and the first signal carries a random access preamble sequence, wherein the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

As one embodiment, the second node device 410 apparatus comprises: at least one processor and at least one memory, the at least one memory comprising a computer program code; and the at least one memory and the computer program code are configured to be used together with the at least one processor. The second node device 410 apparatus at least: sends a first PDCCH; and receives a first signal, wherein the first PDCCH is used for triggering sending of the first signal, and the first signal carries a random access preamble sequence, wherein the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

As one embodiment, the second node device 410 comprises: a memory storing a computer-readable instruction program, the computer-readable instruction program generates actions when executed by at least one processor, and the actions comprise: sending a first PDCCH; and receiving a first signal, wherein the first PDCCH is used for triggering sending of the first signal, and the first signal carries a random access preamble sequence, wherein the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

As one embodiment, the first node device 450 is one piece of user equipment (UE).

As one embodiment, the second node device 410 is one base station device (gNB/eNB).

As one embodiment, the receiving device 456 (comprising the antenna 460) and the receiving processor 452 are used for receiving the first PDCCH in the present application.

As one embodiment, the transmitting device 456 (comprising the antenna 460) and the transmitting processor 455 are used for sending the first signal in the present application.

As one embodiment, the receiving device 456 (comprising the antenna 460) and the receiving processor 452 are used for monitoring the second PDCCH in the present application.

As one embodiment, the receiving device 456 (comprising the antenna 460), the receiving processor 452, and the controller/processor 490 are used for receiving the first information block in the present application.

As one embodiment, the transmitting device 416 (comprising the antenna 420) and the transmitting processor 415 are used for sending the first PDCCH in the present application.

As one embodiment, the receiving device 416 (comprising the antenna 420) and the receiving processor 412 are used for receiving the first signal in the present application.

As one embodiment, the transmitting device 416 (comprising the antenna 420) and the transmitting processor 415 are used for sending the second PDCCH in the present application.

As one embodiment, the transmitting device 416 (comprising the antenna 420), the transmitting processor 412, and the controller/processor 440 are used for sending the first information block in the present application.

## Embodiment 5

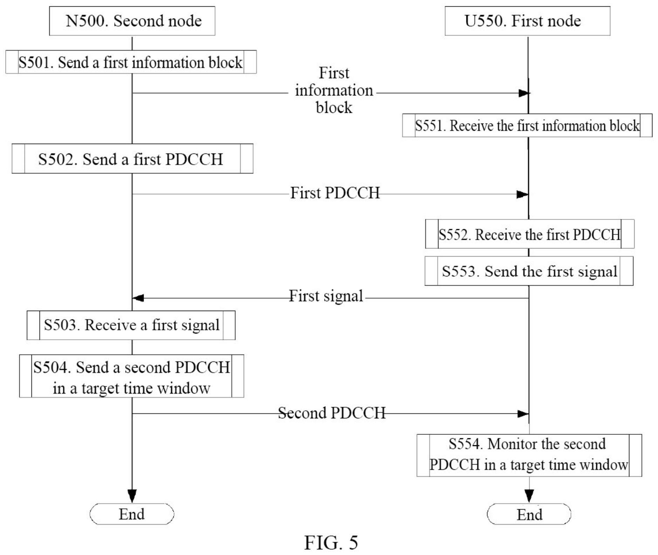

Embodiment 5 illustrates a flow chart of wireless signal transmission according to one embodiment of the present application, as shown in FIG. 5. In FIG. 5, a second node device N500 is a maintenance base station of a serving cell of a first node device U550. It is particularly noted that an order in this example does not limit a signal transmission order and an implementation order in the present application.

For **the second node device N500,** a second information block is sent in step S501, a first PDCCH is sent in step S502, a first signal is received in step S503, and a second PDCCH is sent in a target time window in step S504.

For **the first node device U550,** a first information block is received in step S551, a first PDCCH is received in step S552, a first signal is sent in step S553, and a second PDCCH is monitored in a target time window in step S554.

In Embodiment 5, the first PDCCH is used for triggering sending of the first signal, and the first signal carries a random access preamble sequence; the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; the first threshold value is related to a first sub-carrier spacing, and a sub-carrier spacing of the first PDCCH and a sub-carrier spacing of the first signal are used together for determining the first sub-carrier spacing; the second PDCCH is used in response to the first signal; the cell associated with the first signal is used for determining at least one of a duration of the target time window or a starting moment of the target time window; and the first information block is used for determining a power ramping step, the first PDCCH is used for determining a first count value, and the power ramping step and the first count value are used together for determining a transmission power value of the first signal.

As one embodiment, the first information block is transmitted through an air interface or a wireless interface.

As one embodiment, the first information block comprises all or part of one piece of high-layer signaling or one piece of physical layer signaling.

As one embodiment, the first information block comprises all or part of one piece of RRC (Radio Resource Control) layer signaling, or the first information block comprises all or part of one piece of MAC (Medium Access Control) layer signaling.

As one embodiment, the first information block comprises all or part of one system information block (SIB).

As one embodiment, the first information block comprises all or part of one SIB1.

As one embodiment, the first information block is UE-specific, or the first information block is cell-specific.

As one embodiment, the first information block is for the first cell.

As one embodiment, the first information block is for a cell to which the first PDCCH belongs.

As one embodiment, the first information block is for a cell other than a cell to which the first PDCCH belongs.

As one embodiment, the first information block is for each cell.

As one embodiment, the first information block is for each cell group or each cell list.

As one embodiment, the first information block is configured per carrier, or the first information block is configured per BWP (bandwidth part), or the first information block is configured per band or per frequency range (FR).

As one embodiment, the first information block comprises all or part of fields in a DCI (Downlink Control Information) format.

As one embodiment, the first information block comprises an IE "RRCReconfiguration"; or the first information block comprises all or part of an IE "RRCReconfiguration-v1700-IEs"; or the first information block comprises all or part of an IE "RRCReconfiguration-v1800-IEs"; or the first information block comprises all or part of an IE "LTM_CellGroupReconfig-r18"; or the first information block comprises all or part of an IE "ltmCellReconfig-r18"; or the first information block comprises all or part of an IE "ltmCellConfig-r18"; or the first information block comprises all or part of an IE "LTM-Config-r18"; or the first information block comprises all or part of an IE "ServingCellConfig"; or the first information block comprises all or part of an IE "CellGroupConfig"; or the first information block comprises all or part of an IE "LTMConfig"; or the first information block comprises all or part of an IE "L1L2TriggerMobilityConfig".

As one embodiment, the first information block is an IE comprising a random access channel configuration.

As one embodiment, the first information block comprises an IE other than an IE "RACH-ConfigDedicated" or an IE "RACH-ConfigCommon".

As one embodiment, the first information block comprises a field "powerRampingStep"; or the first information block comprises all or part of an IE "RACH-ConfigGeneric"; or the first information block comprises all or part of an IE "RACH-ConfigDedicated"; or the first information block comprises all or part of an IE "RACH-ConfigCommon"; or the first information block comprises all or part of an IE "SpCellConfig"; or the first information block comprises all or part of an IE "BWP-UplinkCommon"; or the first information block comprises all or part of an IE "BWP-Uplink".

As one embodiment, the first information block comprises all or part of random access configuration information.

As one embodiment, the first information block comprises all or part of LTM configuration information.

## Embodiment 6

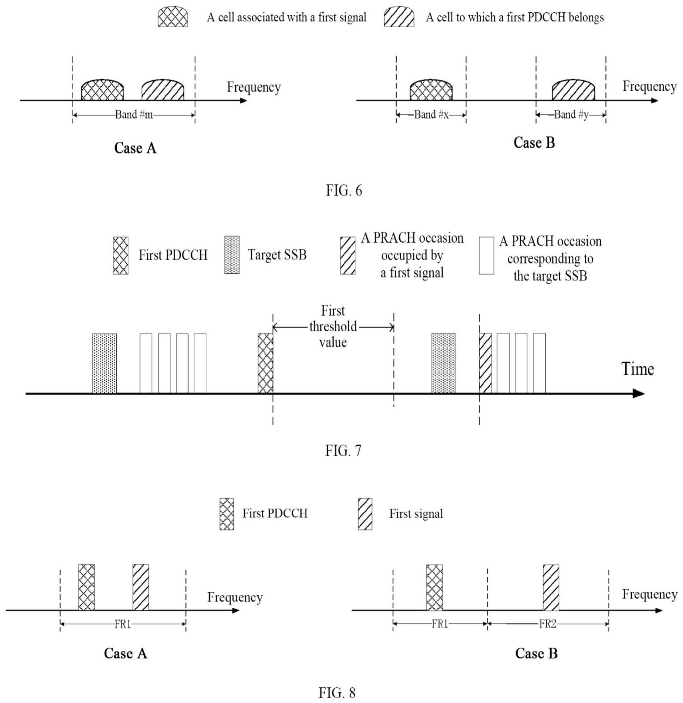

Embodiment 6 illustrates a schematic diagram of a relationship between a cell associated with a first signal and a cell to which a first PDCCH belongs according to one embodiment of the present application, as shown in FIG. 6. In FIG. 6, in Case A and Case B, an area filled with cross lines represents the cell associated with the first signal, and an area filled with diagonal lines represents a cell to which the first PDCCH belongs; in Case A, the cell associated with the first signal and the cell to which the first PDCCH belongs belong to an identical band; and in Case B, the cell associated with the first signal and the cell to which the first PDCCH belongs respectively belong to different bands.

In Embodiment 6, a switching delay parameter value is used for determining the first threshold value in the present application; when a cell associated with the first signal in the present application and a cell to which the first PDCCH in the present application belongs respectively belong to different bands, the switching delay parameter value is predefined; and when a cell associated with the first signal and a cell to which the first PDCCH belongs belong to an identical band, the switching delay parameter value is equal to a delay value of BWP switching.

As one embodiment, the switching delay parameter value is determined according to whether they are in an identical band, thereby maximizing reuse of existing designs and reducing standard complexity.

As one embodiment, the switching delay parameter value is a value of a parameter $\Delta_{BWPSwitching}$.

As one embodiment, the unit of the switching delay parameter value is millisecond (ms).

As one embodiment, the switching delay parameter value is a processing delay when BWP switching occurs.

As one embodiment, the switching delay parameter value is greater than or equal to 0.

As one embodiment, the switching delay parameter value is equal to a value of $T_{BWPswitchDelay}$ or is equal to 0.

As one embodiment, the switching delay parameter value is equal to a duration corresponding to $T_{BWPswitchDelay}$ slots or the switching delay parameter value is equal to 0.

As one embodiment, the switching delay parameter value is equal to a duration corresponding to $T_{BWPswitchDelay}$ +1 slots or the switching delay parameter value is equal to 0.

As one embodiment, the switching delay parameter value is a value of a parameter $\Delta_{BWPSwitching}$ or a value of a parameter $T_{switch}$.

As one embodiment, the switching delay parameter value is equal to a value of $T_{BWPswitchDelay}$ or is equal to a value of a parameter $T_{switch}$.

As one embodiment, the switching delay parameter value is equal to a duration corresponding to $T_{BWPswitchDelay}$ slots or the switching delay parameter value is equal to a value of a parameter $T_{switch}$.

As one embodiment, the switching delay parameter value is equal to a duration corresponding to $T_{BWPswitchDelay}$ +1 slots, or the switching delay parameter value is equal to a value of a parameter $T_{switch}$.

As one embodiment, the technical feature of "a switching delay parameter value is used for determining the first threshold value" includes the following meaning: the switching delay parameter value is used by the first node device in the present application for determining the first threshold value.

As one embodiment, the technical feature of "a switching delay parameter value is used for determining the first threshold value" includes the following meaning: the switching delay parameter value is a value of a component included in the first threshold value.

As one embodiment, the technical feature of "a switching delay parameter value is used for determining the first threshold value" includes the following meaning: the switching delay parameter value is a value of one parameter used when the first threshold value is calculated.

As one embodiment, the technical feature of "a switching delay parameter value is used for determining the first threshold value" includes the following meaning: the first threshold value and the switching delay parameter value are linearly correlated.

As one embodiment, the technical feature of "a switching delay parameter value is used for determining the first threshold value" includes the following meaning: the first threshold value and the switching delay parameter value are in proportional correlation.

As one embodiment, the technical feature of "a switching delay parameter value is used for determining the first threshold value" includes the following meaning: the switching delay parameter value is used for calculating the first threshold value according to a fixed functional relationship.

As one embodiment, the technical features of "when a cell associated with the first signal and a cell to which the first PDCCH belongs respectively belong to different bands" and "when a carrier corresponding to the cell associated with the first signal and a carrier corresponding to the cell to which the first PDCCH belongs respectively belong to different bands" are equivalent or can be used interchangeably.

As one embodiment, the technical features of "when a cell associated with the first signal and a cell to which the first PDCCH belongs respectively belong to different bands" and "when a carrier to which the first signal belongs and a carrier to which the first PDCCH belongs respectively belong to different bands" are equivalent or can be used interchangeably.

As one embodiment, the technical features of "when a cell associated with the first signal and a cell to which the first PDCCH belongs respectively belong to different bands" and "when a frequency domain resource occupied by the first signal and a frequency domain resource occupied by the first PDCCH respectively belong to different bands" are equivalent or can be used interchangeably.

As one embodiment, the technical features of "when a cell associated with the first signal and a cell to which the first PDCCH belongs respectively belong to different bands" and "when a cell associated with the first signal and a cell to which the first PDCCH belongs are inter-band cells" are equivalent or can be used interchangeably.

As one embodiment, the technical features of "when a cell associated with the first signal and a cell to which the first PDCCH belongs respectively belong to different bands" and "for the LTM of inter-bands" are equivalent or can be used interchangeably.

As one embodiment, the technical features of "when a cell associated with the first signal and a cell to which the first PDCCH belongs respectively belong to different bands" and "when a source cell and a target cell (or candidate cell) of LTM are inter-band cells" are equivalent or can be used interchangeably.

As one embodiment, the technical feature of "the switching delay parameter value is predefined" includes the following meaning: the switching delay parameter value is fixed.

As one embodiment, the technical feature of "the switching delay parameter value is predefined" includes the following meaning: the switching delay parameter value is equal to 0.

As one embodiment, the technical feature of "the switching delay parameter value is predefined" includes the following meaning: the switching delay parameter value is equal to a value of a parameter $T_{\text{switch}}$.

As one embodiment, the technical feature of "the switching delay parameter value is predefined" includes the following meaning: the switching delay parameter value is equal to a value of a parameter $N_{T,2}$.

As one embodiment, the technical features of "when a cell associated with the first signal and a cell to which the first PDCCH belongs belong to an identical band" and "when a carrier corresponding to the cell associated with the first signal and a carrier corresponding to the cell to which the first PDCCH belongs belong to an identical band" are equivalent or can be used interchangeably.

As one embodiment, the technical features of "when a cell associated with the first signal and a cell to which the first PDCCH belongs belong to an identical band" and "when a carrier to which the first signal belongs and a carrier to which the first PDCCH belongs belong to an identical band" are equivalent or can be used interchangeably.

As one embodiment, the technical features of "when a cell associated with the first signal and a cell to which the first PDCCH belongs belong to an identical band" and "when a frequency domain resource occupied by the first signal and a frequency domain resource occupied by the first PDCCH belong to an identical band" are equivalent or can be used interchangeably.

As one embodiment, the technical features of "when a cell associated with the first signal and a cell to which the first PDCCH belongs belong to an identical band" and "when a cell associated with the first signal and a cell to which the first PDCCH belongs are intra-band cells" are equivalent or can be used interchangeably.

As one embodiment, the technical features of "when a cell associated with the first signal and a cell to which the first PDCCH belongs belong to an identical band" and "for the LTM of intra-bands" are equivalent or can be used interchangeably.

As one embodiment, the technical features of "when a cell associated with the first signal and a cell to which the first PDCCH belongs belong to an identical band" and "when a source cell and a target cell (or candidate cell) of LTM are intra-band cells" are equivalent or can be used interchangeably.

As one embodiment, the technical feature of "the switching delay parameter value is equal to a delay value of BWP switching" includes the following meaning: the switching delay parameter value is equal to a delay value of BWP switching in one given situation.

As one embodiment, the technical feature of "the switching delay parameter value is equal to a delay value of BWP switching" includes the following meaning: the switching delay parameter value is equal to a delay value of BWP switching corresponding to a BWP switching delay type 1.

As one embodiment, the technical feature of "the switching delay parameter value is equal to a delay value of BWP switching" includes the following meaning: the switching delay parameter value is equal to a delay value of BWP switching corresponding to a BWP switching delay type 2.

As one embodiment, the technical feature of "the switching delay parameter value is equal to a delay value of BWP switching" includes the following meaning: the switching delay parameter value is equal to a delay value of BWP switching corresponding to the first sub-carrier spacing.

As one embodiment, the technical feature of "the switching delay parameter value is equal to a delay value of BWP switching" includes the following meaning: the switching delay parameter value is equal to a delay value of BWP switching corresponding to the larger sub-carrier spacing between a sub-carrier spacing of an active BWP in the cell to which the first PDCCH belongs and a sub-carrier spacing of the first signal.

As one embodiment, the technical feature of "the switching delay parameter value is equal to a delay value of BWP switching" includes the following meaning: the switching delay parameter value is equal to a delay value of BWP switching corresponding to a case where a cell to which DCI requested by BWP switching belongs and a cell in which BWP switching occurs are the same.

As one embodiment, the technical feature of "the switching delay parameter value is equal to a delay value of BWP switching" includes the following meaning: the switching delay parameter value is equal to a delay value of BWP switching corresponding to a case where a cell to which DCI requested by BWP switching belongs and a cell in which the BWP switching occurs are not the same.

As one embodiment, the technical feature of "the switching delay parameter value is equal to a delay value of BWP switching" includes the following meaning: assuming that a cell to which DCI requested by BWP switching belongs and a cell in which the BWP switching occurs are the same, the switching delay parameter value is equal to a delay value of corresponding BWP switching.

As one embodiment, the technical feature of "the switching delay parameter value is equal to a delay value of BWP switching" includes the following meaning: assuming that a cell to which DCI requested by BWP switching belongs and a cell in which the BWP switching occurs are not the same, the switching delay parameter value is equal to a delay value of corresponding BWP switching.

As one embodiment, the technical feature of "the switching delay parameter value is equal to a delay value of BWP switching" includes the following meaning: the switching delay parameter value is equal to a total duration of multiple slots of a delay of BWP switching.

## Embodiment 7

Embodiment 7 illustrates a schematic diagram of a target SSB according to one embodiment of the present application, as shown in FIG. 7. In FIG. 7, a horizontal axis represents time, a rectangle filled with cross lines represents a first PDCCH, each rectangle filled with dots represents one transmission of the target SSB, a rectangle filled with diagonal lines represents a PRACH occasion occupied by a first signal, and each unfilled rectangle represents a PRACH occasion other than the PRACH occasion occupied by the first signal corresponding to the target SSB.

In Embodiment 7, the first PDCCH in the present application is used for determining the target SSB, multiple PRACH occasions correspond to the target SSB, and the PRACH occasion occupied by the first signal in the present application is a next PRACH occasion among the multiple PRACH occasions, the length of a time interval between the next PRACH occasion and the first PDCCH in a time domain being not less than the first threshold value in the present application.

As one embodiment, the target SSB includes a PSS (primary synchronization signal), an SSS (secondary synchronization signal), and a PBCH (physical broadcast channel).

As one embodiment, the target SSB is one time of transmission of an SSB (SS/PBCH block).

As one embodiment, the target SSB is periodic transmission of an SSB having an equal index value.

As one embodiment, the target SSB is transmission of multiple SSBs having equal index values.

As one embodiment, the technical feature of "the first PDCCH is used for determining a target SSB" includes the following meaning: the first PDCCH is used by the first node device in the present application for determining the target SSB.

As one embodiment, the technical feature of "the first PDCCH is used for determining a target SSB" includes the following meaning: the first PDCCH is used for explicitly or implicitly indicating the target SSB.

As one embodiment, the technical feature of "the first PDCCH is used for determining a target SSB" includes the following meaning: one or more fields in a DCI format carried by the first PDCCH is/are used for explicitly or implicitly indicating an index value or identifier value of the target SSB.

As one embodiment, the technical feature of "the first PDCCH is used for determining a target SSB" includes the following meaning: one or more fields in a DCI format carried by the first PDCCH is/are used for explicitly or implicitly indicating a time domain position of the target SSB.

As one embodiment, the technical feature of "the first PDCCH is used for determining a target SSB" includes the following meaning: one or more fields in a DCI format carried by the first PDCCH is/are used for explicitly or implicitly indicating a frequency domain position of the target SSB.

As one embodiment, any one of the multiple PRACH occasions is an RO (RACH occasion).

As one embodiment, any one of the multiple PRACH occasions is a time-frequency resource configured (or reserved) for a PRACH.

As one embodiment, any one of the multiple PRACH occasions is a time-frequency resource that can be used for PRACH transmission.

As one embodiment, the technical feature of "multiple PRACH occasions correspond to the target SSB" includes the following meaning: the multiple PRACH occasions are all associated with the target SSB.

As one embodiment, the technical feature of "multiple PRACH occasions correspond to the target SSB" includes the following meaning: the multiple PRACH occasions are all associated with an index (or identifier) of the target SSB.

As one embodiment, the technical feature of "multiple PRACH occasions correspond to the target SSB" includes the following meaning: an index of the target SSB is mapped to the multiple PRACH occasions.

As one embodiment, the technical feature of "multiple PRACH occasions correspond to the target SSB" includes the following meaning: the multiple PRACH occasions and the target SSB are QCL (quasi-co-located).

As one embodiment, the technical feature of "multiple PRACH occasions correspond to the target SSB" includes the following meaning: receiving antenna ports corresponding to the multiple PRACH occasions are the same as sending antenna ports of the target SSB.

As one embodiment, a correspondence relationship between the multiple PRACH occasions and the target SSB is configurable.

As one embodiment, a correspondence relationship between the multiple PRACH occasions and the target SSB is predefined.

As one embodiment, a number of the multiple PRACH occasions corresponding to the target SSB is configurable.

As one embodiment, an association cycle between the multiple PRACH occasions and the target SSB is configurable.

As one embodiment, the technical features of "multiple PRACH occasions correspond to the target SSB" and "the target SSB corresponds to multiple PRACH occasions" are equivalent or can be used interchangeably.

As one embodiment, a PRACH occasion occupied by the first signal is a PRACH occasion to which a time-frequency resource occupied by the first signal belongs.

As one embodiment, a PRACH occasion occupied by the first signal is a PRACH occasion to which a first signal resource is mapped.

As one embodiment, a PRACH occasion occupied by the first signal is a PRACH occasion of a time-frequency resource to which the first signal is mapped.

As one embodiment, the first signal occupies all time-frequency resources in a PRACH occasion occupied by the first signal.

As one embodiment, the first signal occupies partial time-frequency resources in a PRACH occasion occupied by the first signal.

As one embodiment, a PRACH occasion occupied by the first signal is one of the multiple PRACH occasions.

As one embodiment, a PRACH occasion occupied by the first signal is later than the first PDCCH.

As one embodiment, an earliest symbol included in a PRACH occasion occupied by the first signal in a time domain is later than a latest symbol occupied by the first PDCCH in the time domain.

As one embodiment, an earliest symbol occupied by the first signal in a time domain is later than a latest symbol occupied by the first PDCCH in the time domain.

As one embodiment, a latest symbol of reception of the first PDCCH is earlier than an earliest symbol of the first signal, and a length of a time interval between the latest symbol of reception of the first PDCCH and the earliest symbol of the first signal is greater than or equal to the first threshold value.

As one embodiment, a latest symbol of reception of the first PDCCH is earlier than an earliest symbol of the first signal, a length of a time interval between the latest symbol of reception of the first PDCCH and the earliest symbol of the first signal is greater than or equal to the first threshold value, and the earliest symbol of the first signal includes a timing difference between the cell associated with the first signal and the cell to which the first PDCCH belongs.

As one embodiment, a length of a time interval between a PRACH occasion occupied by the first signal and the first PDCCH in a time domain includes a timing difference between the cell associated with the first signal and the cell to which the first PDCCH belongs.

As one embodiment, the first threshold value includes a timing difference between the cell associated with the first signal and the cell to which the first PDCCH belongs.

As one embodiment, the technical feature of "a PRACH occasion occupied by the first signal is a next PRACH occasion among the multiple PRACH occasions, a length of a time interval between the next PRACH occasion and the first PDCCH in a time domain being not less than the first threshold value" includes the following meaning: the PRACH occasion occupied by the first signal is an earliest PRACH occasion where a length of a time interval between a latest time domain symbol included in the multiple PRACH occasions and an earliest time domain symbol occupied by the first PDCCH is not less than the first threshold value.

As one embodiment, the technical feature of "a PRACH occasion occupied by the first signal is a next PRACH occasion among the multiple PRACH occasions, a length of a time interval between the next PRACH occasion and the first PDCCH in a time domain being not less than the first threshold value" includes the following meanings: the PRACH occasion occupied by the first signal is one of the multiple PRACH occasions, a length of a time interval between an earliest time domain symbol included in the first signal and a latest time domain symbol occupied by the first PDCCH is greater than or equal to the first threshold value, and there is no PRACH occasion among the multiple PRACH occasions that is earlier than the PRACH occasion occupied by the first signal, where a length of a time interval between the earliest time domain symbol included and the latest time domain symbol occupied by the first PDCCH is greater than or equal to the first threshold value.

As one embodiment, the technical feature of "a PRACH occasion occupied by the first signal is a next PRACH occasion among the multiple PRACH occasions, a length of a time interval between the next PRACH occasion and the first PDCCH in a time domain being not less than the first threshold value" includes the following meaning: the PRACH occasion occupied by the first signal is a next PRACH occasion among the multiple PRACH occasions that is later than the first PDCCH, where a length of a time interval between the next PRACH occasion and the first PDCCH in a time domain is not less than the first threshold value.

As one embodiment, the technical feature of "a PRACH occasion occupied by the first signal is a next PRACH occasion among the multiple PRACH occasions, a length of a time interval between the next PRACH occasion and the first PDCCH being not less than the first threshold value" includes the following meaning: the multiple PRACH occasions include W1 PRACH occasions, an earliest time domain symbol included in any one of the W1 PRACH occasions is later than a latest time domain symbol occupied by the first PDCCH, a time interval between the earliest time domain symbol included in any one of the W1 PRACH occasions and the latest time domain symbol occupied by the first PDCCH is not less than the first threshold value, the PRACH occasion occupied by the first signal is an earliest PRACH occasion among the W1 PRACH occasions, and W1 is a positive integer greater than 1.

As one embodiment, the technical feature of "a PRACH occasion occupied by the first signal is a next PRACH occasion among the multiple PRACH occasions, a length of a time interval between the next PRACH occasion and the first PDCCH in a time domain being not less than the first threshold value" includes the following meaning: an earliest time domain symbol occupied by the first signal is later than a latest time domain symbol occupied by the first PDCCH, a length of a time interval between the earliest time domain symbol occupied by the first signal and the latest time domain symbol occupied by the first PDCCH is greater than or equal to the first threshold value, and the PRACH occasion occupied by the first signal is a next available PRACH occasion among the multiple PRACH occasions.

As one embodiment, the technical feature of "the PRACH occasion occupied by the first signal is a next PRACH occasion among the multiple PRACH occasions, a length of a time interval between the next PRACH occasion and the first PDCCH in a time domain being not less than the first threshold value" includes the following meaning: the PRACH occasion occupied by the first signal is a next available PRACH occasion among the multiple PRACH occasions.

## Embodiment 8

Embodiment 8 illustrates a schematic diagram of a relationship between a frequency range to which a first signal belongs and a frequency range to which a first PDCCH belongs according to one embodiment of the present application, as shown in FIG. 8. In FIG. 8, in Case A and Case B, a horizontal axis represents frequency, a rectangle filled with cross lines represents the first PDCCH, and a rectangle filled with diagonal lines represents the first signal; in Case A, the first signal and the first PDCCH both belong to a frequency range 1 (FR1); and in Case B, the first signal and the first PDCCH respectively belong to a frequency range 2 (FR2) and the frequency range 1 (FR1).

In Embodiment 8, an initial delay parameter value is used for determining the first threshold value in the present application, and at least one of a frequency range to which the first signal belongs or a frequency range to which the first PDCCH belongs is used for determining the initial delay parameter value.

As one embodiment, by using at least one of a frequency range to which the first signal belongs or a frequency range to which the first PDCCH belongs for determining the initial delay parameter value, an MAC layer initialization delay requirement during cross-frequency-range LTM is clarified, and the feasibility of implementation is ensured.

As one embodiment, the initial delay parameter value is a value of a parameter $\Delta_{Delay}$.

As one embodiment, a unit of the initial delay parameter value is millisecond (ms).

As one embodiment, the initial delay parameter value is a delay of initialization of an MAC layer.

As one embodiment, the initial delay parameter value is greater than 0.

As one embodiment, the initial delay parameter value is equal to 0.5 milliseconds or 0.25 milliseconds.

As one embodiment, the initial delay parameter value is a delay of an initialization random access parameter of the MAC layer.

As one embodiment, the initial delay parameter value and the switching delay parameter value in the present application are values of two independent parameters.

As one embodiment, the initial delay parameter value and the switching delay parameter value in the present application are values of two different parameters.

As one embodiment, the initial delay parameter value and the switching delay parameter value in the present application are not correlated.

As one embodiment, the technical feature of "an initial delay parameter value is used for determining the first threshold value" includes the following meaning: the initial delay parameter value is used by the first node device in the present application for determining the first threshold value.

As one embodiment, the technical feature of "an initial delay parameter value is used for determining the first threshold value" includes the following meaning: the initial delay parameter value is a value of one component included in the first threshold value.

As one embodiment, the technical feature of "an initial delay parameter value is used for determining the first threshold value" includes the following meaning: the initial delay parameter value is a value of one parameter used when the first threshold value is calculated.

As one embodiment, the technical feature of "an initial delay parameter value is used for determining the first threshold value" includes the following meaning: the first threshold value and the initial delay parameter value are linearly correlated.

As one embodiment, the technical feature of "an initial delay parameter value is used for determining the first threshold value" includes the following meaning: the first threshold value and the initial delay parameter value are in proportional correlation.

As one embodiment, the technical feature of "an initial delay parameter value is used for determining the first threshold value" includes the following meaning: the initial delay parameter value is used for calculating the first threshold value according to a fixed functional relationship.

As one embodiment, a frequency range to which the first signal belongs is a frequency range to which a frequency domain resource occupied by the first signal belongs.

As one embodiment, a frequency range to which the first signal belongs is a frequency range to which a channel mapped by the first signal belongs.

As one embodiment, a frequency range to which the first signal belongs is a frequency range in which the first signal is operated.

As one embodiment, a frequency range to which the first signal belongs is a frequency range to which an operating band of the first signal in a frequency domain belongs.

As one embodiment, a frequency range to which the first signal belongs is a frequency range to which a channel bandwidth of the first signal in a frequency domain belongs.

As one embodiment, a frequency range to which the first signal belongs is a frequency range to which a cell associated with the first signal belongs.

As one embodiment, a frequency range to which the first signal belongs is a frequency range to which a carrier corresponding to a cell associated with the first signal belongs.

As one embodiment, a frequency range to which the first signal belongs is a frequency range of a carrier to which a frequency domain resource occupied by the first signal belongs.

As one embodiment, a frequency range to which the first signal belongs is a frequency range 1 (FR1) or a frequency range 2 (FR2).

As one embodiment, a frequency range to which the first signal belongs is a frequency range 1 (FR1) or a frequency range 2-1 (FR2-1) or a frequency range 2-2 (FR2-2).

As one embodiment, a frequency range to which the first PDCCH belongs is a frequency range to which a frequency domain resource occupied by the first PDCCH belongs.

As one embodiment, a frequency range to which the first PDCCH belongs is a frequency range to which a channel mapped by the first PDCCH belongs.

As one embodiment, a frequency range to which the first PDCCH belongs is a frequency range in which the first PDCCH is operated.

As one embodiment, a frequency range to which the first PDCCH belongs is a frequency range to which an operating band of the first PDCCH in a frequency domain belongs.

As one embodiment, a frequency range to which the first PDCCH belongs is a frequency range to which a channel bandwidth of the first PDCCH in a frequency domain belongs.

As one embodiment, a frequency range to which the first PDCCH belongs is a frequency range to which a carrier to which a frequency domain resource occupied by the first PDCCH belongs belongs.

As one embodiment, a frequency range to which the first PDCCH belongs is a frequency range 1 (FR1) or a frequency range 2 (FR2).

As one embodiment, a frequency range to which the first PDCCH belongs is a frequency range 1 (FR1) or a frequency range 2-1 (FR2-1) or a frequency range 2-2 (FR2-2).

As one embodiment, the technical feature of "at least one of a frequency range to which the first signal belongs or a frequency range to which the first PDCCH belongs is used for determining the initial delay parameter value" includes the following meaning: at least one of the frequency range to which the first signal belongs or the frequency range to which the first PDCCH belongs is used by the first node device in the present application for determining the initial delay parameter value.

As one embodiment, the technical feature of "at least one of a frequency range to which the first signal belongs or a frequency range to which the first PDCCH belongs is used for determining the initial delay parameter value" includes the following meaning: at least one of the frequency range to which the first signal belongs or the frequency range to which the first PDCCH belongs is used for determining the initial delay parameter value based on a correspondence relationship or a conditional relationship.

As one embodiment, the technical feature of "at least one of a frequency range to which the first signal belongs or a frequency range to which the first PDCCH belongs is used for determining the initial delay parameter value" includes the following meaning: the frequency range to which the first signal belongs and the frequency range to which the first PDCCH belongs are both used for determining the initial delay parameter value.

As one embodiment, the technical feature of "at least one of a frequency range to which the first signal belongs or a frequency range to which the first PDCCH belongs is used for determining the initial delay parameter value" includes the following meaning: the frequency range to which the first signal belongs is used for determining the initial delay parameter value.

As one embodiment, the technical feature of "at least one of a frequency range to which the first signal belongs or a frequency range to which the first PDCCH belongs is used for determining the initial delay parameter value" includes the following meaning: the frequency range to which the first PDCCH belongs is used for determining the initial delay parameter value.

As one embodiment, the technical feature of "at least one of a frequency range to which the first signal belongs or a frequency range to which the first PDCCH belongs is used for determining the initial delay parameter value" includes the following meaning: regardless of the frequency range to which the first signal belongs, the initial delay parameter value is only related to the frequency range to which the first PDCCH belongs.

As one embodiment, the technical feature of "at least one of a frequency range to which the first signal belongs or a frequency range to which the first PDCCH belongs is used for determining the initial delay parameter value" includes the following meaning: regardless of the frequency range to which the first PDCCH belongs, the initial delay parameter value is only related to the frequency range to which the first signal belongs.

As one embodiment, the technical feature of "at least one of a frequency range to which the first signal belongs or a frequency range to which the first PDCCH belongs is used for determining the initial delay parameter value" includes the following meaning: when the first signal belongs to a frequency range 1, the initial delay parameter value is equal to 0.5 milliseconds (ms); and when the first signal belongs to a frequency range 2, the initial delay parameter value is equal to 0.25 milliseconds (ms).

As one embodiment, the technical feature of "at least one of a frequency range to which the first signal belongs or a frequency range to which the first PDCCH belongs is used for determining the initial delay parameter value" includes the following meaning: the frequency range to which the first signal belongs is used as a reference frequency range for determining the initial delay parameter value.

As one embodiment, the technical feature of "at least one of a frequency range to which the first signal belongs or a frequency range to which the first PDCCH belongs is used for determining the initial delay parameter value" includes the following meaning: the frequency range to which the first signal belongs is treated as (or assumed as) a frequency range to which the first signal and the first PDCCH belong together, and the frequency range to which the first signal belongs is used for determining the initial delay parameter value.

As one embodiment, the technical feature of "at least one of a frequency range to which the first signal belongs or a frequency range to which the first PDCCH belongs is used for determining the initial delay parameter value" includes the following meaning: when the first PDCCH belongs to a frequency range 1, the initial delay parameter value is equal to 0.5 milliseconds (ms); and when the first PDCCH belongs to a frequency range 2, the initial delay parameter value is equal to 0.25 milliseconds (ms).

As one embodiment, the technical feature of "at least one of a frequency range to which the first signal belongs or a frequency range to which the first PDCCH belongs is used for determining the initial delay parameter value" includes the following meaning: the frequency range to which the first PDCCH belongs is used as a reference frequency range for determining the initial delay parameter value.

As one embodiment, the technical feature of "at least one of a frequency range to which the first signal belongs or a frequency range to which the first PDCCH belongs is used for determining the initial delay parameter value" includes the following meaning: the frequency range to which the first PDCCH belongs is treated as (or assumed as) a frequency range to which the first signal and the first PDCCH belong together, and the frequency range to which the first PDCCH belongs is used for determining the initial delay parameter value.

As one embodiment, the technical feature of "at least one of a frequency range to which the first signal belongs or a frequency range to which the first PDCCH belongs is used for determining the initial delay parameter value" includes the following meaning: the frequency range to which the first signal belongs is deemed to be a frequency range used when the initial delay parameter value is determined.

As one embodiment, the technical feature of "at least one of a frequency range to which the first signal belongs or a frequency range to which the first PDCCH belongs is used for determining the initial delay parameter value" includes the following meaning: the frequency range to which the first PDCCH belongs is deemed to be a frequency range used when the initial delay parameter value is determined.

As one embodiment, the technical feature of "at least one of a frequency range to which the first signal belongs or a frequency range to which the first PDCCH belongs is used for determining the initial delay parameter value" includes the following meaning: whether the frequency range to which the first signal belongs and the frequency range to which the first PDCCH belongs are the same is used for determining the initial delay parameter value.

As one embodiment, the technical feature of "at least one of a frequency range to which the first signal belongs or a frequency range to which the first PDCCH belongs is used for determining the initial delay parameter value" includes the following meaning: when the frequency range to which the first signal belongs and the frequency range to which the first PDCCH belongs are the same, a frequency range to which the first signal and the first PDCCH belong together is used for determining the initial delay parameter value; and when the frequency range to which the first signal belongs and the frequency range to which the first PDCCH belongs are not the same, the initial delay parameter value is equal to 0.5 ms.

As one embodiment, the technical feature of "at least one of a frequency range to which the first signal belongs or a frequency range to which the first PDCCH belongs is used for determining the initial delay parameter value" includes the following meaning: when the frequency range to which the first signal belongs and the frequency range to which the first PDCCH belongs are the same, a frequency range to which the first signal and the first PDCCH belong together is used for determining the initial delay parameter value; and when the frequency range to which the first signal belongs and the frequency range to which the first PDCCH belongs are not the same, the initial delay parameter value is equal to 0.25 ms.

As one embodiment, the technical feature of "at least one of a frequency range to which the first signal belongs or a frequency range to which the first PDCCH belongs is used for determining the initial delay parameter value" includes the following meaning: if the frequency range to which the first signal belongs and the frequency range to which the first PDCCH belongs are not the same, the initial delay parameter value is equal to a value corresponding to a frequency range 1.

As one embodiment, the technical feature of "at least one of a frequency range to which the first signal belongs or a frequency range to which the first PDCCH belongs is used for determining the initial delay parameter value" includes the following meaning: if the frequency range to which the first signal belongs and the frequency range to which the first PDCCH belongs are not the same, the initial delay parameter value is equal to a value corresponding to a frequency range 2.

As one embodiment, the technical feature of "at least one of a frequency range to which the first signal belongs or a frequency range to which the first PDCCH belongs is used for determining the initial delay parameter value" includes the following meanings: when the first signal and the first PDCCH both belong to a frequency range 1, the initial delay parameter value is equal to 0.5 milliseconds (ms); when the first signal and the first PDCCH both belong to a frequency range 2, the initial delay parameter value is equal to 0.25 milliseconds (ms); when the first signal and the first PDCCH respectively belong to the frequency range 1 and the frequency range 2, the initial delay parameter value is equal to 0.5 milliseconds (ms); and when the first signal and the first PDCCH respectively belong to the frequency range 2 and the frequency range 1, the initial delay parameter value is equal to 0.25 milliseconds (ms).

As one embodiment, the technical feature of "at least one of a frequency range to which the first signal belongs or a frequency range to which the first PDCCH belongs is used for determining the initial delay parameter value" includes the following meanings: when the first signal and the first PDCCH both belong to a frequency range 1, the initial delay parameter value is equal to 0.5 milliseconds (ms); when the first signal and the first PDCCH both belong to a frequency range 2, the initial delay parameter value is equal to 0.25 milliseconds (ms); and when the first signal and the first PDCCH respectively belong to different frequency ranges, the initial delay parameter value is equal to 0.5 milliseconds (ms).

As one embodiment, the technical feature of "at least one of a frequency range to which the first signal belongs or a frequency range to which the first PDCCH belongs is used for determining the initial delay parameter value" includes the following meanings: when the first signal and the first PDCCH both belong to a frequency range 1, the initial delay parameter value is equal to 0.5 milliseconds (ms); when the first signal and the first PDCCH both belong to a frequency range 2, the initial delay parameter value is equal to 0.25 milliseconds (ms); and when the first signal and the first PDCCH respectively belong to different frequency ranges, the initial delay parameter value is equal to 0.25 milliseconds (ms).

As one embodiment, the technical feature of "at least one of a frequency range to which the first signal belongs or a frequency range to which the first PDCCH belongs is used for determining the initial delay parameter value" includes the following meanings: when the first signal and the first PDCCH both belong to a frequency range 1, the initial delay parameter value is equal to 0.5 milliseconds (ms); when the first signal and the first PDCCH both belong to a frequency range 2, the initial delay parameter value is equal to 0.25 milliseconds (ms); and when the first signal and the first PDCCH respectively belong to different frequency ranges, the initial delay parameter value is equal to Z1 milliseconds (ms), and Z1 is equal to a predefined value other than 0.5 or 0.25.

As one embodiment, the technical feature of "at least one of a frequency range to which the first signal belongs or a frequency range to which the first PDCCH belongs is used for determining the initial delay parameter value" includes the following meanings: when the first signal and the first PDCCH both belong to a frequency range 1, the initial delay parameter value is equal to 0.5 milliseconds (ms); when the first signal and the first PDCCH both belong to a frequency range 2, the initial delay parameter value is equal to 0.25 milliseconds (ms); and when the first signal and the first PDCCH respectively belong to different frequency ranges, the initial delay parameter value is equal to Z1 milliseconds (ms), and Z1 is a value related to the capability of the first node device.

As one embodiment, the technical feature of "at least one of a frequency range to which the first signal belongs or a frequency range to which the first PDCCH belongs is used for determining the initial delay parameter value" includes the following meanings: when the first signal and the first PDCCH both belong to a frequency range 1, the initial delay parameter value is equal to 0.5 milliseconds (ms); when the first signal and the first PDCCH both belong to a frequency range 2, the initial delay parameter value is equal to 0.25 milliseconds (ms); when the first signal and the first PDCCH respectively belong to a frequency range 1 and a frequency range 2, the initial delay parameter value is equal to Z1 milliseconds (ms); when the first signal and the first PDCCH respectively belong to a frequency range 2 and a frequency range 1, the initial delay parameter value is equal to Z2 milliseconds (ms); Z1 is equal to a predefined value other than 0.5 or 0.25, Z2 is equal to a predefined value other than 0.5 or 0.25, and the Z1 and the Z2 are not equal.

As one embodiment, the technical feature of "at least one of a frequency range to which the first signal belongs or a frequency range to which the first PDCCH belongs is used for determining the initial delay parameter value" includes the following meanings: when the first signal and the first PDCCH both belong to a frequency range 1, the initial delay parameter value is equal to 0.5 milliseconds (ms); when the first signal and the first PDCCH both belong to a frequency range 2, the initial delay parameter value is equal to 0.25 milliseconds (ms); when the first signal and the first PDCCH respectively belong to a frequency range 1 and a frequency range 2, the initial delay parameter value is equal to Z1 milliseconds (ms); when the first signal and the first PDCCH respectively belong to a frequency range 2 and a frequency range 1, the initial delay parameter value is equal to Z2 milliseconds (ms); and the Z1 and the Z2 are both values related to the capability of the first node device.

## Embodiment 9

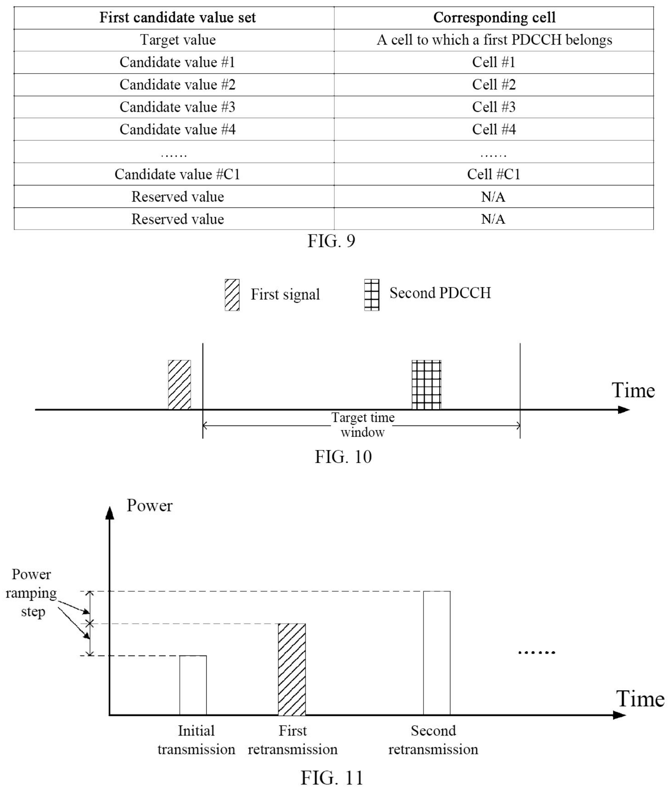

Embodiment 9 illustrates a schematic diagram of a first candidate value set according to one embodiment of the present application, as shown in FIG. 9. In FIG. 9, a left column represents a first candidate value set, and a right column represents cells corresponding to candidate values.

In Embodiment 9, the first PDCCH in the present application carries a first field, a value of the first field carried by the first PDCCH belongs to a first candidate value set, and the first candidate value set comprises multiple candidate values; in the present application, the first signal being associated with a cell other than the cell to which the first PDCCH belongs depends on a value of the first field carried by the first PDCCH being equal to a candidate value other than a target value in the first candidate value set, and the target value is one predefined candidate value in the first candidate value set.

As one embodiment, through introduction of the target value, while dynamically switching the sending of PRACH between a source cell and a target cell (or candidate cell) is supported, the signaling overhead is reduced.

As one embodiment, the technical feature of "the first PDCCH carries a first field" includes the following meaning: a format used by DCI carried by the first PDCCH includes the first field.

As one embodiment, the technical feature of "the first PDCCH carries a first field" includes the following meaning: DCI including the first field is transmitted on the first PDCCH.

As one embodiment, the technical feature of "the first PDCCH carries a first field" includes the following meaning: DCI including the first field is mapped on the first PDCCH.

As one embodiment, the technical feature of "the first PDCCH carries a first field" includes the following meaning: DCI including the first field is used for generating the first PDCCH.

As one embodiment, the technical feature of "the first PDCCH carries a first field" includes the following meaning: information bits of DCI carried by the first PDCCH include bits occupied by the first field.

As one embodiment, the first field is an LTM candidate cell (or target cell) configuration indicator (or identifier).

As one embodiment, the first field is an LTM candidate cell (or target cell) indicator (or identifier).

As one embodiment, the first field is a candidate cell (or target cell) configuration indicator (or identifier).

As one embodiment, the first field is a candidate cell (or target cell) indicator (or identifier).

As one embodiment, the first field is a re-interpretation of a legacy field.

As one embodiment, the first field is a re-interpretation of a reserved bit.

As one embodiment, the first field occupies at least 1 reserved bit in a DCI format including the first field.

As one embodiment, for a PDCCH order other than LTM, any one bit occupied by the first field is a reserved bit.

As one embodiment, one piece of signaling or one parameter is used for configuring at least 1 reserved bit in DCI carried by the first PDCCH to be used as the first field.

As one embodiment, at least 1 capability parameter reported by the first node device is used for determining that at least 1 reserved bit in DCI carried by the first PDCCH is used as the first field.

As one embodiment, at least 1 capability parameter reported by the first node device and one piece of signaling or one higher-layer parameter are used together for determining that at least 1 reserved bit in DCI carried by the first PDCCH is used as the first field.

As one embodiment, any candidate value included in the first candidate value set is one possible value of the first field carried by the first PDCCH.

As one embodiment, any candidate value included in the first candidate value set is one possible state of the first field carried by the first PDCCH.

As one embodiment, any candidate value included in the first candidate value set is one candidate value or candidate state of the first field carried by the first PDCCH.

As one embodiment, the first candidate value set includes all possible values of the first field carried by the first PDCCH.

As one embodiment, the first candidate value set includes all possible states of the first field carried by the first PDCCH.

As one embodiment, the first candidate value set only includes part of possible values of the first field carried by the first PDCCH.

As one embodiment, the first candidate value set only includes part of possible states of the first field carried by the first PDCCH.

As one embodiment, any candidate value included in the first candidate value set is a non-negative integer.

As one embodiment, any candidate value included in the first candidate value set is a state of one bitmap.

As one embodiment, any candidate value included in the first candidate value set is a value of one character string.

As one embodiment, N1 is equal to a number of bits included in the first field carried by the first PDCCH, and a number of candidate valuesincluded in the first candidate value set is equal to 2 to power of N1.

As one embodiment, N1 is equal to a number of bits included in the first field carried by the first PDCCH, and a number of candidate values included in the first candidate value set is equal to a sum of 2 to power of N1 plus 1.

As one embodiment, N1 is equal to a number of bits included in the first field carried by the first PDCCH, and a number of candidate values included in the first candidate value set is greater than 2 to power of N1.

As one embodiment, N1 is equal to a number of bits included in the first field carried by the first PDCCH, and a number of candidate value included in the first candidate value set is less than 2 to power of N1.

As one embodiment, a candidate value included in the first candidate value set is predefined.

As one embodiment, a candidate value included in the first candidate value set is predefined according to a number of bits included in the first field.

As one embodiment, a number of candidate values included in the first candidate value set is equal to 8.

As one embodiment, a number of candidate values included in the first candidate value set is equal to 4.

As one embodiment, a number of candidate values included in the first candidate value set is equal to 16.

As one embodiment, a number of candidate values included in the first candidate value set is equal to 32.

As one embodiment, the technical feature of "the first signal being associated with a cell other than a cell to which the first PDCCH belongs depends on a value of the first field carried by the first PDCCH being equal to a candidate value other than a target value in the first candidate value set" includes the following meaning: the value of the first field carried by the first PDCCH not being equal to the target value is used for determining that the first signal is associated with the cell other than the cell to which the first PDCCH belongs.

As one embodiment, the technical feature of "the first signal being associated with a cell other than a cell to which the first PDCCH belongs depends on a value of the first field carried by the first PDCCH being equal to a candidate value other than a target value in the first candidate value set" includes the following meaning: the value of the first field carried by the first PDCCH being equal to the candidate value other than the target value in the first candidate value set is a condition for the first signal being associated with the cell other than the cell to which the first PDCCH belongs.

As one embodiment, the technical feature of "the first signal being associated with a cell other than a cell to which the first PDCCH belongs depends on a value of the first field carried by the first PDCCH being equal to a candidate value other than a target value in the first candidate value set" includes the following meaning: the first signal being associated with the cell other than the cell to which the first PDCCH belongs is indicated by configuring the value of the first field carried by the first PDCCH to be equal to the candidate value other than the target value in the first candidate value set.

As one embodiment, the technical feature of "the first signal being associated with a cell other than a cell to which the first PDCCH belongs depends on a value of the first field carried by the first PDCCH being equal to a candidate value other than a target value in the first candidate value set" includes the following meaning: the value of the first field carried by the first PDCCH being equal to the candidate value other than the target value in the first candidate value set results in that the first signal is associated with the cell other than the cell to which the first PDCCH belongs.

As one embodiment, the technical feature of "the first signal being associated with a cell other than a cell to which the first PDCCH belongs depends on a value of the first field carried by the first PDCCH being equal to a candidate value other than a target value in the first candidate value set" includes the following meaning: the value of the first field carried by the first PDCCH being equal to the target value results in the first signal being associated with the cell to which the first PDCCH belongs.

As one embodiment, the technical feature of "the first signal being associated with a cell other than a cell to which the first PDCCH belongs depends on a value of the first field carried by the first PDCCH being equal to a candidate value other than a target value in the first candidate value set" includes the following meaning: when the value of the first field carried by the first PDCCH is equal to the candidate value other than the target value in the first candidate value set, the first signal is associated with the cell other than the cell to which the first PDCCH belongs.

As one embodiment, the technical feature of "the first signal being associated with a cell other than a cell to which the first PDCCH belongs depends on a value of the first field carried by the first PDCCH being equal to a candidate value other than a target value in the first candidate value set" includes the following meaning: when the value of the first field carried by the first PDCCH is equal to the candidate value other than the target value in the first candidate value set, the first signal is associated with the cell other than the cell to which the first PDCCH belongs; otherwise, the first signal is associated with the cell to which the first PDCCH belongs.

As one embodiment, the technical feature of "the first signal being associated with a cell other than a cell to which the first PDCCH belongs depends on a value of the first field carried by the first PDCCH being equal to a candidate value other than a target value in the first candidate value set" includes the following meaning: when the value of the first field carried by the first PDCCH is equal to the target value, the first signal is associated with the cell to which the first PDCCH belongs; otherwise, the first signal is associated with a cell other than the cell to which the first PDCCH belongs.

As one embodiment, the two expressions of "the first signal being associated with a cell other than a cell to which the first PDCCH belongs depends on a value of the first field carried by the first PDCCH being equal to a candidate value other than a target value in the first candidate value set" and "the first signal being associated with the cell to which the first PDCCH belongs depends on the value of the first field carried by the first PDCCH being equal to the target value" are equivalent or can be used interchangeably.

As one embodiment, the target value is a minimum candidate value in the first candidate value set.

As one embodiment, the target value is a maximum candidate value in the first candidate value set.

As one embodiment, the target value is a corresponding candidate value in the first candidate value set for which bits in the first field are all set to "0".

As one embodiment, the target value is a corresponding candidate value in the first candidate value set for which bits in the first field are all set to "1".

As one embodiment, the target value is equal to 0.

## Embodiment 10

Embodiment 10 illustrates a schematic diagram of a target time window according to one embodiment of the present application, as shown in FIG. 10. In FIG. 10, a horizontal axis represents time, a rectangle filled with diagonal lines represents a first signal, a rectangle filled with cross lines represents a second PDCCH, and the second PDCCH belongs to the target time window in a time domain.

In Embodiment 10, the second PDCCH in the present application is used in response to the first signal in the present application; and the cell associated with the first signal is used for determining at least one of a duration of the target time window or a starting moment of the target time window in the present application.

As one embodiment, time windows are independently configured for different cells, thereby meeting the demands of various scenarios and improving flexibility.

As one embodiment, the target time window is a random access response time window.

As one embodiment, the target time window is a random access response time window for the cell associated with the first signal.

As one embodiment, the target time window is an LTM response time window.

As one embodiment, the target time window is an LTM response time window for the cell associated with the first signal.

As one embodiment, the target time window is used for determining monitoring of the second PDCCH.

As one embodiment, a time domain resource occupied by the second PDCCH belongs to the target time window.

As one embodiment, the target time window comprises a time domain resource of the second PDCCH.

As one embodiment, the first node device assumes or expects that the second PDCCH is transmitted in the target time window.

As one embodiment, monitoring of the second PDCCH is implemented by decoding on a PDCCH candidate.

As one embodiment, monitoring of the second PDCCH is implemented by blind decoding on a PDCCH candidate.

As one embodiment, monitoring of the second PDCCH is implemented by decoding and CRC checking on a PDCCH candidate.

As one embodiment, monitoring of the second PDCCH is implemented by decoding and RNTI (Radio Network Temporary Identity)-scrambled CRC checking on a PDCCH candidate.

As one embodiment, monitoring of the second PDCCH is implemented by decoding on a PDCCH candidate based on one or more monitored DCI formats.

As one embodiment, the second PDCCH is a baseband signal or a radio frequency signal of a PDCCH.

As one embodiment, the second PDCCH is used for carrying (or transmitting) DCI.

As one embodiment, a DCI bit is used for generating the second PDCCH.

As one embodiment, the second PDCCH carries DCI that uses a DCI format 1_0.

As one embodiment, the second PDCCH carries DCI that uses a DCI format 1_1.

As one embodiment, the second PDCCH carries DCI that uses a DCI format 1_2.

As one embodiment, the second PDCCH carries DCI that uses a DCI format 2_k, wherein k is a non-negative integer.

As one embodiment, CRC of the second PDCCH is scrambled by a C-RNTI.

As one embodiment, CRC of a DCI format used by DCI carried by the second PDCCH is scrambled by a C-RNTI.

As one embodiment, CRC of the second PDCCH is scrambled by an RA-RNTI (Random Access Radio Network Temporary Identifier).

As one embodiment, CRC of a DCI format used by DCI carried by the second PDCCH is scrambled by an RA-RNTI.

As one embodiment, CRC of the second PDCCH is scrambled by an LTM-RNTI.

As one embodiment, CRC of a DCI format used by DCI carried by the second PDCCH is scrambled by an LTM-RNTI.

As one embodiment, CRC of the second PDCCH is scrambled by a target RNTI, and the target RNTI is configured by signaling. As one subsidiary embodiment of the above embodiment, the target RNTI is configured by RRC (Radio Resource Control) layer signaling. As one subsidiary embodiment of the above embodiment, the target RNTI is configured by MAC (Medium Access Control) layer signaling. As one subsidiary embodiment of the above embodiment, the target RNTI is configured by signaling used for configuring (or triggering) LTM. As one subsidiary embodiment of the above embodiment, the target RNTI is configured by signaling for a cell associated with the first signal. As one subsidiary embodiment of the above embodiment, the target RNTI is configured by signaling used for configuring (or triggering) LTM for a cell associated with the first signal. As one subsidiary embodiment of the above embodiment, the target RNTI is configured by UE-specific signaling.

As one embodiment, CRC of a DCI format used by DCI carried by the second PDCCH is scrambled by a target RNTI, and the target RNTI is configured by signaling. As one subsidiary embodiment of the above embodiment, the target RNTI is configured by RRC (Radio Resource Control) layer signaling. As one subsidiary embodiment of the above embodiment, the target RNTI is configured by MAC (Medium Access Control) layer signaling. As one subsidiary embodiment of the above embodiment, the target RNTI is configured by signaling used for configuring (or triggering) LTM. As one subsidiary embodiment of the above embodiment, the target RNTI is configured by signaling for a cell associated with the first signal. As one subsidiary embodiment of the above embodiment, the target RNTI is configured by signaling used for configuring (or triggering) LTM for a cell associated with the first signal. As one subsidiary embodiment of the above embodiment, the target RNTI is configured by UE-specific signaling.

As one embodiment, at least one fixed (or predefined) field included in DCI carried by the second PDCCH is set as a predefined value.

As one embodiment, a frequency domain resource assignment field included in DCI carried by the second PDCCH is equal to all "1".

As one embodiment, a PDCCH candidate occupied by the second PDCCH belongs to a common search space set.

As one embodiment, a PDCCH candidate occupied by the second PDCCH belongs to a type 1 common search space set.

As one embodiment, a PDCCH candidate occupied by the second PDCCH belongs to a type 1A common search space set.

As one embodiment, a PDCCH candidate occupied by the second PDCCH belongs to a type 1B common search space set.

As one embodiment, a PDCCH candidate occupied by the second PDCCH belongs to a UE-specific search space set.

As one embodiment, a search space set to which a PDCCH candidate occupied by the second PDCCH belongs exclusively occupies one CORESET (Control Resource Set).

As one embodiment, a search space set to which a PDCCH candidate occupied by the second PDCCH belongs exclusively occupies one CORESET (control resource set) in the target time window.

As one embodiment, a search space set to which a PDCCH candidate occupied by the second PDCCH belongs is not associated with an identical CORESET as other search space sets.

As one embodiment, a search space set to which a PDCCH candidate occupied by the second PDCCH belongs is not associated with an identical CORESET as other search space sets in the target time window.

As one embodiment, a search space set to which a PDCCH candidate occupied by the second PDCCH belongs is configured by signaling.

As one embodiment, a first search space set is a search space set to which a PDCCH candidate occupied by the second PDCCH belongs, and the first node device does not expect to monitor a PDCCH belonging to another search space set in a CORESET associated with the first search space set.

As one embodiment, a first search space set is a search space set to which a PDCCH candidate occupied by the second PDCCH belongs, and the first node device does not expect that another search space set associated with an identical CORESET as the first search space set and the first search space set are fully or partially overlapped in a time domain.

As one embodiment, a first search space set is a search space set to which a PDCCH candidate occupied by the second PDCCH belongs, and the first node device does not expect that there is a monitoring occasion (MO) with full or partial overlap in a time domain between another search space set associated with an identical CORESET as the first search space set and the first search space set.

As one embodiment, the first search space set is a search space set to which a PDCCH candidate occupied by the second PDCCH belongs, and the first node device does not expect to monitor a PDCCH belonging to another search space set in a CORESET associated with the first search space set in the target time window.

As one embodiment, a first search space set is a search space set to which a PDCCH candidate occupied by the second PDCCH belongs, and the first node device does not expect that another search space set associated with an identical CORESET as the first search space set and the first search space set completely or partially overlap in a time domain in the target time window.

As one embodiment, the first search space set is the search space set to which a PDCCH candidate occupied by the second PDCCH belong, and the first node device does not expect that there is a monitoring occasion (MO) with full or partial overlap in a time domain between another search space set associated with an identical CORESET as the first search space set and the first search space set.

As one embodiment, the first PDCCH and the second PDCCH belong to an identical cell.

As one embodiment, the first PDCCH and the second PDCCH respectively belong to different cells.

As one embodiment, the second PDCCH belongs to a cell associated with the first signal.

As one embodiment, the technical feature of "the second PDCCH is used in response to the first signal" includes the following meaning: the second PDCCH is used by a sender of the second PDCCH in response to the first signal.

As one embodiment, the technical feature of "the second PDCCH is used in response to the first signal" includes the following meaning: a signal or channel in response to the first signal includes the second PDCCH.

As one embodiment, the technical feature of "the second PDCCH is used in response to the first signal" includes the following meaning: the second PDCCH is sent for the first signal.

As one embodiment, the technical feature of "the second PDCCH is used in response to the first signal" includes the following meaning: the first signal triggers the transmission of the second PDCCH.

As one embodiment, the technical feature of "the second PDCCH is used in response to the first signal" includes the following meaning: the first signal is used for determining a starting moment of the target time window.

As one embodiment, the technical feature of "the second PDCCH is used in response to the first signal" includes the following meaning: the first signal is used for determining a time-frequency resource occupied by the second PDCCH.

As one embodiment, the technical feature of "the second PDCCH is used in response to the first signal" includes the following meaning: the first signal is used for determining a cell to which the second PDCCH belongs.

As one embodiment, the technical feature of "the second PDCCH is used in response to the first signal" includes the following meaning: the first signal is used for determining a time window to which the second PDCCH belongs in a time domain.

As one embodiment, the technical feature of "the second PDCCH is used in response to the first signal" includes the following meaning: the first signal is used for determining a CORESET to which the second PDCCH belongs.

As one embodiment, the technical feature of "the second PDCCH is used in response to the first signal" includes the following meaning: the first signal is used for determining a cell to which the second PDCCH belongs, and the cell to which the second PDCCH belongs is used for determining a CORESET to which the second PDCCH belongs.

As one embodiment, the technical feature of "the second PDCCH is used in response to the first signal" includes the following meaning: the first signal is used for determining a type of an RNTI carried by the second PDCCH or a value of the RNTI.

As one embodiment, the technical feature of "the second PDCCH is used in response to the first signal" includes the following meaning: the first signal and the second PDCCH belong to an identical random access procedure.

As one embodiment, the technical feature of "the second PDCCH is used in response to the first signal" includes the following meaning: the second PDCCH belongs to a random access procedure initiated or triggered by the first signal.

As one embodiment, the technical feature of "the second PDCCH is used in response to the first signal" includes the following meaning: the first signal and the second PDCCH belong to an identical LTM procedure.

As one embodiment, the technical feature of "the second PDCCH is used in response to the first signal" includes the following meaning: the second PDCCH belongs to an LTM procedure initiated or triggered by the first signal.

As one embodiment, the technical feature of "the second PDCCH is used in response to the first signal" includes the following meaning: the second PDCCH is later than the first signal in a time domain.

As one embodiment, the technical feature of "the second PDCCH is used in response to the first signal" includes the following meaning: the second PDCCH is an earliest PDCCH that is at least a first duration later in a time domain than the first signal and carries a timing advance value for a cell associated with the first signal, and the first duration is predefined or configurable, or is related to the capability of the first node device.

As one embodiment, the technical feature of "the second PDCCH is used in response to the first signal" includes the following meaning: the second PDCCH is a latest PDCCH that is at least a first duration later in a time domain than the first signal and carries a timing advance value for a cell associated with the first signal, and the first duration is predefined or configurable, or is related to the capability of the first node device.

As one embodiment, the technical feature of "the second PDCCH is used in response to the first signal" includes the following meaning: the second PDCCH is a PDCCH with a smallest or greatest CORESET index among all earliest PDCCHs that are at least a first duration later in a time domain than the first signal and carry a timing advance value for a cell associated with the first signal, and the first duration is predefined or configurable, or is related to the capability of the first node device.

As one embodiment, the technical feature of "the second PDCCH is used in response to the first signal" includes the following meaning: the second PDCCH is a PDCCH with a smallest or greatest CORESET index among all latest PDCCHs that are at least a first duration later in a time domain than the first signal and carry a timing advance value for a cell associated with the first signal, and the first duration is predefined or configurable, or is related to the capability of the first node device.

As one embodiment, the technical feature of "the second PDCCH is used in response to the first signal" includes the following meaning: a target PDSCH is an earliest PDSCH (physical downlink shared channel) that is at least a second duration later in a time domain than the first signal and carries a timing advance value for a cell associated with the first signal; the second PDCCH is a PDCCH used for scheduling the target PDSCH; and the second duration is predefined or configurable, or is related to the capability of the first node device.

As one embodiment, the technical feature of "the second PDCCH is used in response to the first signal" includes the following meaning: a target PDSCH is a latest PDSCH that is at least a second duration later in a time domain than the first signal and carries a timing advance value for a cell associated with the first signal; the second PDCCH is a PDCCH used for scheduling the target PDSCH; and the second duration is predefined or configurable, or is related to the capability of the first node device.

As one embodiment, the technical feature of "the second PDCCH is used in response to the first signal" includes the following meaning: a target PDSCH is a PDSCH with a smallest or greatest index of a CORESET to which a scheduling PDCCH belongs among all earliest PDSCHs that are at least a second duration later in a time domain than the first signal and carry a timing advance value for a cell associated with the first signal; the second PDCCH is a PDCCH used for scheduling the target PDSCH; and the second duration is predefined or configurable, or is related to the capability of the first node device.

As one embodiment, the technical feature of "the second PDCCH is used in response to the first signal" includes the following meaning: a target PDSCH is a PDSCH with a smallest or greatest index of a CORESET to which a scheduling PDCCH belongs among all latest PDSCHs that are at least a second duration later in a time domain than the first signal and carry a timing advance value for a cell associated with the first signal; the second PDCCH is a PDCCH used for scheduling the target PDSCH; and the second duration is predefined or configurable, or is related to the capability of the first node device.

As one embodiment, the technical feature of "the second PDCCH is used in response to the first signal" includes the following meaning: the second PDCCH is at least a third duration later in a time domain than the first signal; a PDSCH scheduled by the second PDCCH is an earliest PDSCH carrying a timing advance value for a cell associated with the first signal; and the third duration is predefined or configurable, or is related to the capability of the first node device.

As one embodiment, the technical feature of "the second PDCCH is used in response to the first signal" includes the following meaning: the second PDCCH is at least a third duration later in a time domain than the first signal; a PDSCH scheduled by the second PDCCH is a latest PDSCH carrying a timing advance value for a cell associated with the first signal; and the third duration is predefined or configurable, or is related to the capability of the first node device.

As one embodiment, the technical feature of "the second PDCCH is used in response to the first signal" includes the following meaning: the second PDCCH is at least a third duration later in a time domain than the first signal, the second PDCCH is a PDCCH with a smallest or greatest index of a CORESET to which all the scheduling PDCCHs belong among all scheduling PDCCHs, at least one earliest PDSCH in all the scheduling PDCCHs carries a timing advance value for a cell associated with the first signal, and the third duration is predefined or configurable, or is related to the capability of the first node device.

As one embodiment, the technical feature of "the second PDCCH is used in response to the first signal" includes the following meaning: the second PDCCH is at least a third duration later in a time domain than the first signal, the second PDCCH is a PDCCH with a smallest or greatest index of a CORESET to which all the scheduling PDCCHs belong among all scheduling PDCCHs, at least one latest PDSCH in all the scheduling PDCCHs carries a timing advance value for a cell associated with the first signal, and the third duration is predefined or configurable, or is related to the capability of the first node device.

As one embodiment, the second PDCCH being detected in the target time window is used for considering that a procedure to which the first signal belongs is completed.

As one embodiment, the second PDCCH being detected in the target time window is used for considering that a procedure to which the first signal belongs is successful.

As one embodiment, after the second PDCCH is successfully received, an MAC entity may stop the target time window.

As one embodiment, after the second PDCCH is successfully received, an MAC entity may stop monitoring of the second PDCCH.

As one embodiment, a duration of the target time window is expressed by a number of slots.

As one embodiment, a duration of the target time window is an absolute duration.

As one embodiment, a unit of a duration of the target time window is millisecond.

As one embodiment, a duration of the target time window is expressed by a number of symbols.

As one embodiment, a duration of the target time window is expressed by a number of subframes.

As one embodiment, a duration of the target time window is expressed by a number of slots of a sub-carrier spacing corresponding to sub-carriers occupied by the second PDCCH in a frequency domain.

As one embodiment, a duration of the target time window is expressed by a number of slots of a sub-carrier spacing corresponding to a BWP in a cell associated with the first signal.

As one embodiment, a starting moment of the target time window is a position of a starting symbol included in the target time window.

As one embodiment, a starting moment of the target time window is a length of a time interval between a starting symbol included in the target time window and the first signal.

As one embodiment, a starting moment of the target time window is a minimum value of a length of a time interval between a starting symbol included in the target time window and the first signal.

As one embodiment, the technical feature of "the cell associated with the first signal is used for determining at least one of a duration of the target time window or a starting moment of the target time window" includes the following meaning: the cell associated with the first signal is used by the first node device in the present application for determining at least one of the duration of the target time window or the starting moment of the target time window.

As one embodiment, the technical feature of "the cell associated with the first signal is used for determining at least one of a duration of the target time window or a starting moment of the target time window" includes the following meaning: a value of the first field in the present application is used for determining at least one of the duration of the target time window or the starting moment of the target time window.

As one embodiment, the technical feature of "the cell associated with the first signal is used for determining at least one of a duration of the target time window or the starting moment of the target time window" includes the following meaning: the cell associated with the first signal is used for determining the duration of the target time window and the starting moment of the target time window.

As one embodiment, the technical feature of "the cell associated with the first signal is used for determining at least one of a duration of the target time window or the starting moment of the target time window" includes the following meaning: the cell associated with the first signal is used for determining the duration of the target time window.

As one embodiment, the technical feature of "the cell associated with the first signal is used for determining at least one of a duration of the target time window or a starting moment of the target time window" includes the following meaning: the cell associated with the first signal is used for determining the starting moment of the target time window.

As one embodiment, the technical feature of "the cell associated with the first signal is used for determining at least one of a duration of the target time window or a starting moment of the target time window" includes the following meaning: a configuration for the cell associated with the first signal is used for determining at least one of the duration of the target time window or the starting moment of the target time window.

As one embodiment, the technical feature of "the cell associated with the first signal is used for determining at least one of a duration of the target time window or a starting moment of the target time window" includes the following meaning: X1 candidate cells respectively correspond to X1 candidate lengths and X1 candidate delay lengths, X1 is a positive integer, and the cell associated with the first signal is one of the X1 candidate cells; the duration of the target time window is equal to a candidate length corresponding to the cell associated with the first signal among the X1 candidate lengths; and the starting moment of the target time window is an earliest symbol of an earliest CORESET associated with a type 1 PDCCH common search space set that is at least S1 symbols away from a latest symbol in a PRACH occasion occupied by the first signal, and S1 is equal to a candidate delay length corresponding to the cell associated with the first signal among the X1 candidate delay lengths.

As one embodiment, the technical feature of "the cell associated with the first signal is used for determining at least one of a duration of the target time window or a starting moment of the target time window" includes the following meanings: X1 candidate cell groups respectively correspond to X1 candidate lengths and X1 candidate delay lengths, X1 is a positive integer, the cell associated with the first signal belongs to one of the X1 candidate cell groups, and any one of the X1 candidate cell groups includes at least 1 cell; the duration of the target time window is equal to a candidate length corresponding to a cell group to which the cell associated with the first signal belongs among the X1 candidate lengths; and the starting moment of the target time window is an earliest symbol of an earliest CORESET associated with a type 1 PDCCH common search space set that is at least S1 symbols away from a latest symbol in a PRACH occasion occupied by the first signal, and S1 is equal to a candidate delay length corresponding to a cell group to which the cell associated with the first signal belongs among the X1 candidate delay lengths.

As one embodiment, the technical feature of "the cell associated with the first signal is used for determining at least one of a duration of the target time window or a starting moment of the target time window" includes the following meaning: X1 candidate configurations are respectively used for determining X1 candidate lengths and X1 candidate delay lengths, the X1 candidate configurations are respectively for X1 candidate cells, X1 is a positive integer, and the cell associated with the first signal is one of the X1 candidate cells; a target configuration is a candidate configuration for the cell associated with the first signal among the X1 candidate configurations, and the first PDCCH is used for determining the target configuration from the X1 candidate configurations; and the duration of the target time window is equal to a candidate length determined by the target configuration among the X1 candidate lengths, the starting moment of the target time window is an earliest symbol of an earliest CORESET associated with a type 1 PDCCH common search space set that is at least S1 symbols away from a latest symbol in a PRACH occasion occupied by the first signal, and S1 is equal to a candidate delay length determined by the target configuration among the X1 candidate delay lengths.

As one embodiment, the technical feature of "the cell associated with the first signal is used for determining at least one of a duration of the target time window or a starting moment of the target time window" includes the following meaning: X1 candidate configurations are respectively used for determining X1 candidate lengths and X1 candidate delay lengths; the X1 candidate configurations are respectively for X1 candidate cell groups, any one of the X1 candidate cell groups includes at least 1 cell; X1 is a positive integer; the cell associated with the first signal belongs to one of the X1 candidate cell groups; a target configuration is a candidate configuration for a candidate cell group to which the cell associated with the first signal belongs among the X1 candidate configurations, and the first PDCCH is used for determining the target configuration from the X1 candidate configurations; and the duration of the target time window is equal to a candidate length determined by the target configuration among the X1 candidate lengths, the starting moment of the target time window is an earliest symbol of an earliest CORESET associated with a type 1 PDCCH common search space set that is at least S1 symbols away from a latest symbol in a PRACH occasion occupied by the first signal, and S1 is equal to a candidate delay length determined by the target configuration among the X1 candidate delay lengths.

As one embodiment, the technical feature of "the cell associated with the first signal is used for determining at least one of the duration of the target time window or a starting moment of the target time window" includes the following meaning: X1 candidate cells respectively correspond to X1 candidate lengths, X1 is a positive integer, and the cell associated with the first signal is one of the X1 candidate cells; and the duration of the target time window is equal to a candidate length corresponding to the cell associated with the first signal among the X1 candidate lengths.

As one embodiment, the technical feature of "the cell associated with the first signal is used for determining at least one of a duration of the target time window or a starting moment of the target time window" includes the following meaning: X1 candidate cell groups respectively correspond to X1 candidate lengths, X1 is a positive integer, the cell associated with the first signal belongs to one of the X1 candidate cell groups, and any one of the X1 candidate cell groups includes at least 1 cell; and the duration of the target time window is equal to a candidate length corresponding to a cell group to which the cell associated with the first signal belongs among the X1 candidate lengths.

As one embodiment, the technical feature of "the cell associated with the first signal is used for determining at least one of a duration of the target time window or a starting moment of the target time window" includes the following meaning: X1 candidate configurations are respectively used for determining X1 candidate lengths, the X1 candidate configurations are respectively for X1 candidate cells, X1 is a positive integer, and the cell associated with the first signal is one of the X1 candidate cells; a target configuration is a candidate configuration for the cell associated with the first signal among the X1 candidate configurations, and the first PDCCH is used for determining the target configuration from the X1 candidate configurations; and the duration of the target time window is equal to a candidate length determined by the target configuration among the X1 candidate lengths.

As one embodiment, the technical feature of "the cell associated with the first signal is used for determining at least one of a duration of the target time window or a starting moment of the target time window" includes the following meaning: X1 candidate configurations are respectively used for determining X1 candidate lengths, the X1 candidate configurations are respectively for X1 candidate cell groups, any one of the X1 candidate cell groups includes at least 1 cell, X1 is a positive integer, and the cell associated with the first signal belongs to one of the X1 candidate cell groups; a target configuration is a candidate configuration for a candidate cell group to which the cell associated with the first signal belongs among the X1 candidate configurations, and the first PDCCH is used for determining the target configuration from the X1 candidate configurations; and the duration of the target time window is equal to a candidate length determined by the target configuration among the X1 candidate lengths.

As one embodiment, the technical feature of "the cell associated with the first signal is used for determining at least one of a duration of the target time window or a starting moment of the target time window" includes the following meaning: X1 candidate cells respectively correspond to X1 candidate delay lengths, X1 is a positive integer, and the cell associated with the first signal is one of the X1 candidate cells; and the starting moment of the target time window is an earliest symbol of an earliest CORESET associated with a type 1 PDCCH common search space set that is at least S1 symbols away from a latest symbol in a PRACH occasion occupied by the first signal, and S1 is equal to a candidate delay length corresponding to the cell associated with the first signal among the X1 candidate delay lengths.

As one embodiment, the technical feature of "the cell associated with the first signal is used for determining at least one of a duration of the target time window or a starting moment of the target time window" includes the following meaning: X1 candidate cell groups respectively correspond to X1 candidate delay lengths, X1 is a positive integer, the cell associated with the first signal belongs to one of the X1 candidate cell groups, and any one of the X1 candidate cell groups includes at least 1 cell; and the starting moment of the target time window is an earliest symbol of an earliest CORESET associated with a type 1 PDCCH common search space set that is at least S1 symbols away from a latest symbol in a PRACH occasion occupied by the first signal, and S1 is equal to a candidate delay length corresponding to a cell group to which the cell associated with the first signal belongs among the X1 candidate delay lengths.

As one embodiment, the technical feature of "the cell associated with the first signal is used for determining at least one of a duration of the target time window or a starting moment of the target time window" includes the following meaning: X1 candidate configurations are respectively used for determining X1 candidate delay lengths, the X1 candidate configurations are respectively for X1 candidate cells, X1 is a positive integer, and the cell associated with the first signal is one of the X1 candidate cells; a target configuration is a candidate configuration for the cell associated with the first signal among the X1 candidate configurations, and the first PDCCH is used for determining the target configuration from the X1 candidate configurations; and the starting moment of the target time window is an earliest symbol of an earliest CORESET associated with a type 1 PDCCH common search space set that is at least S1 symbols away from a latest symbol in a PRACH occasion occupied by the first signal, and S1 is equal to a candidate delay length determined by the target configuration in the X1 candidate delay lengths.

As one embodiment, the technical feature of "the cell associated with the first signal is used for determining at least one of a duration of the target time window or a starting moment of the target time window" includes the following meaning: X1 candidate configurations are respectively used for determining X1 candidate delay lengths, the X1 candidate configurations are respectively for X1 candidate cell groups, any one of the X1 candidate cell groups includes at least 1 cell, X1 is a positive integer, and the cell associated with the first signal belongs to one of the X1 candidate cell groups; a target configuration is a candidate configuration for a candidate cell group to which the cell associated with the first signal belongs among the X1 candidate configurations, and the first PDCCH is used for determining the target configuration from the X1 candidate configurations; and the starting moment of the target time window is an earliest symbol of an earliest CORESET associated with a type 1 PDCCH common search space set that is at least S1 symbols away from a latest symbol in a PRACH occasion occupied by the first signal, and S1 is equal to a candidate delay length determined by the target configuration in the X1 candidate delay lengths.

**Embodiment 11**

Embodiment 11 illustrates a schematic diagram of a power ramping step according to one embodiment of the present application, as shown in FIG. 11. In FIG. 11, a horizontal axis represents time, a vertical axis represents power, each rectangle represents one time of transmission of a random access channel, a rectangle filled with diagonal lines represents a first signal, and the power ramping step is used for determining a power ramping amplitude between two times of transmission.

In Embodiment 11, the first information block in the present application is used for determining the power ramping step, the first PDCCH in the present application is used for determining a first count value, and the power ramping step and the first count value are used together for determining a transmission power value of the first signal in the present application.

As one embodiment, by determining the first count value via the first PDCCH, UE can accurately set the transmission power value of the first signal, thereby ensuring detection performance of the first signal.

As one embodiment, a unit of the power ramping step is dB.

As one embodiment, a unit of the power ramping step is milliwatt (mW).

As one embodiment, a unit of the power ramping step is dBm.

As one embodiment, the power ramping step is a non-negative integer.

As one embodiment, the power ramping step is not less than 0.

As one embodiment, the power ramping step is equal to one of 0 dB, 2 dB, 4 dB, or 6 dB.

As one embodiment, the power ramping step is a power-ramping factor.

As one embodiment, the power ramping step is a value of power adjustment (or changes) during retransmission of a PRACH (or preamble).

As one embodiment, the power ramping step is equal to a power ramping step of a PRACH configured for a cell to which the first PDCCH belongs.

As one embodiment, the power ramping step is equal to a power ramping step of a dedicated PRACH configured for the cell to which the first PDCCH belongs.

As one embodiment, the power ramping step is equal to a power ramping step of a cell-specific or common PRACH configured for the cell to which the first PDCCH belongs.

As one embodiment, the power ramping step is unrelated to a power ramping step of a PRACH configured for the cell to which the first PDCCH belongs.

As one embodiment, the power ramping step and a power ramping step of a PRACH configured for the cell to which the first PDCCH belongs are respectively configured by two fields or two pieces of IE.

As one embodiment, the power ramping step and a power ramping step of a PRACH configured for the cell to which the first PDCCH belongs are independent.

As one embodiment, the power ramping step is equal to a power ramping step of a PRACH configured for the first cell.

As one embodiment, the power ramping step is equal to a power ramping step of a PRACH configured for a cell other than the cell to which the first PDCCH belongs.

As one embodiment, the technical feature of "the first information block is used for determining a power ramping step" includes the following meaning: the first information block is used by the first node device in the present application for determining the power ramping step.

As one embodiment, the technical feature of "the first information block is used for determining a power ramping step" includes the following meaning: all or part included in the first information block is used for explicitly or implicitly indicating the power ramping step.

As one embodiment, the technical feature of "the first information block is used for determining a power ramping step" includes the following meaning: the first information block and at least one parameter other than parameters included in the first information block are used together for determining the power ramping step.

As one embodiment, the technical feature of "the first information block is used for determining a power ramping step" includes the following meaning: all or part included in the first information block is used for explicitly or implicitly indicating a candidate power ramping step, the power ramping step is equal to a product between the candidate power ramping step and an expansion factor, and the expansion factor is predefined or configured.

As one embodiment, the first count value is a non-negative integer.

As one embodiment, the first count value is a positive integer.

As one embodiment, the first count value does not exceed a maximum retransmissions number of times of a PRACH (or preamble) for one cell.

As one embodiment, a maximum value of the first count value does not exceed 3.

As one embodiment, a maximum value of the first count value does not exceed 7.

As one embodiment, a maximum value of the first count value does not exceed 15.

As one embodiment, the first count value is used for retransmission counting of a PRACH (or preamble).

As one embodiment, the first count value is used for determining a retransmission sequence number of a PRACH (or preamble).

As one embodiment, the first count value is used for retransmission counting of a PRACH (or preamble) for one cell.

As one embodiment, the first count value is used for retransmission counting of a PRACH (or preamble) for the first cell.

As one embodiment, the first count value is used for retransmission counting of a PRACH (or preamble) for one cell in LTM.

As one embodiment, the technical feature of "the first PDCCH is used for determining a first count value" includes the following meaning: the first PDCCH is used by the first node device in the present application for determining the first count value.

As one embodiment, the technical feature of "the first PDCCH is used for determining a first count value" includes the following meaning: all or part in DCI carried by the first PDCCH is used for explicitly or implicitly indicating the first count value.

As one embodiment, the technical feature of "the first PDCCH is used for determining a first count value" includes the following meaning: at least 1 field in DCI carried by the first PDCCH is used for explicitly or implicitly indicating the first count value.

As one embodiment, the technical feature of "the power ramping step and the first count value are used together for determining a transmission power value of the first signal" includes the following meaning: the power ramping step and the first count value are used together by the first node device in the present application for determining the transmission power value of the first signal.

As one embodiment, the technical feature of "the power ramping step and the first count value are used together for determining a transmission power value of the first signal" includes the following meaning: the power ramping step and the first count value are used together for calculating the transmission power value of the first signal.

As one embodiment, the technical feature of "the power ramping step and the first count value are used together for determining a transmission power value of the first signal" includes the following meaning: a product between the power ramping step and the first count value is used for calculating the transmission power value of the first signal.

As one embodiment, the technical feature of "the power ramping step and the first count value are used together for determining a transmission power value of the first signal" includes the following meaning: a product between the power ramping step and a difference of the first count value minus 1 is used for calculating the transmission power value of the first signal.

As one embodiment, the technical feature of "the power ramping step and the first count value are used together for determining a transmission power value of the first signal" includes the following meaning: the transmission power value of the first signal is equal to a smaller value of a first upper limit value and a first power value, the first upper limit value is a maximum output power at which the first node device is configured, and the first power value and a product between the power ramping step and a difference of the first count value minus 1 are linearly correlated.

As one embodiment, the technical feature of "the power ramping step and the first count value are used together for determining a transmission power value of the first signal" includes the following meaning: the transmission power value of the first signal is equal to a smaller value of a first upper limit value and a first power value, the first upper limit value is a maximum output power at which the first node device is configured, and the first power value and a product between the power ramping step and the first count value are linearly correlated.

As one embodiment, a unit of a transmission power value of the first signal is dBm.

As one embodiment, a unit of a transmission power value of the first signal is mW.

As one embodiment, a transmission power value of the first signal is not greater than a maximum output power value at which the first node device is configured in the first cell.

As one embodiment, a transmission power value of the first signal is not greater than a maximum output power value at which the first node device is configured in a cell to which the first PDCCH belongs.

As one embodiment, a transmission power value of the first signal is not greater than a smaller value of a maximum output power value at which the first node device is configured in the first cell or a maximum output power value at which the first node device is configured in a cell to which the first PDCCH belongs.

As one embodiment, the technical feature of "the power ramping step and the first count value are used together for determining a transmission power value of the first signal" is achieved by satisfying a following equation:

$$P_{\mathrm{PRACH},b,f,c}(i) = \min\{P_{\mathrm{CMAX},f,c}(i), P_{\mathrm{PRACH,target},f,c} + PL_{b,f,c}\}[\mathrm{dBm}]$$

wherein $P_{\mathrm{PRACH},b,f,c}(i)$ represents the transmission power value of the first signal, $P_{\mathrm{CMAX},f,c}(i)$ represents a maximum output power value at which the first node device is configured, $PL_{b,f,c}$ represents path loss in an uplink BWP b on a carrier $f$ of a first cell c, and $P_{\mathrm{PRACH,target},f,c}$ is equal to a sum of a configured preamble reception target power and a product value between the power ramping step and a difference of the first count value minus 1.

As one embodiment, the technical feature of "the power ramping step and the first count value are used together for determining a transmission power value of the first signal" is achieved by satisfying a following equation:

$$P_{\mathrm{PRACH},b,f,c}(i) = \min\{P_{\mathrm{CMAX},f,c}(i), P_{\mathrm{PRACH,target},f,c} + PL_{b,f,c}\}[\mathrm{dBm}]$$

wherein $P_{\mathrm{PRACH},b,f,c}(i)$ represents a transmission power value of the first signal, $P_{\mathrm{CMAX},f,c}(i)$ represents a maximum output power value at which the first node device is configured, $PL_{b,f,c}$ represents path loss in an uplink BWP b on a carrier $f$ of a first cell c, and $P_{\mathrm{PRACH,target},f,c}$ is equal to a sum of a configured preamble reception target power and a product value between the power ramping step and the first count value.

As one embodiment, the technical feature of "the power ramping step and the first count value are used together for determining a transmission power value of the first signal" is achieved by satisfying a following equation:

$$P_{\mathrm{PRACH},b,f,c}(i) = \min\left\{P_{\mathrm{CMAX},f,c}(i), P_{\mathrm{PRACH,target},f,c} + PL_{b,f,c}\right\}[\mathrm{dBm}]$$

wherein $P_{\mathrm{PRACH},b,f,c}(i)$ represents a transmission power value of the first signal, $P_{\mathrm{CMAX},f,c}(i)$ represents a maximum output power value at which the first node device is configured, $PL_{b,f,c}$ represents path loss in an uplink BWP $b$ on a carrier $f$ of a first cell c, and $P_{\mathrm{PRACH,target},f,c}$ is equal to a sum of a configured preamble reception target power, a product value between the power ramping step and a difference of the first count value minus 1, and one configured power offset value.

## Embodiment 12

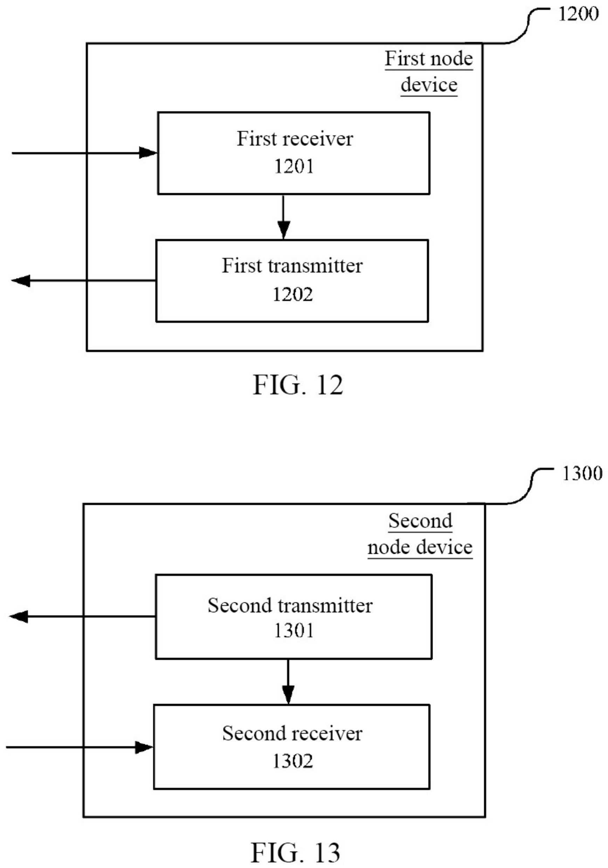

Embodiment 12 illustrates a structural block diagram of a processing device in a first node device of one embodiment, as shown in FIG. 12. In FIG. 12, a processing device 1200 of the first node device comprises a first receiver 1201 and a first transmitter 1202. The first receiver 1201 comprises a transmitting device/receiving device 456 (comprising an antenna 460), a receiving processor 452, and a controller/processor 490 in FIG. 4 of the present application; and the first transmitter 1202 comprises a transmitting device/receiving device 456 (comprising an antenna 460), a transmitting processor 455, and a controller/processor 490 in FIG. 4 of the present application.

In Embodiment 12, the first receiver 1201 receives a first PDCCH; the first transmitter 1202 sends a first signal, the first PDCCH is used for triggering sending of the first signal, and the first signal carries a random access preamble sequence, wherein the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

As one embodiment, a switching delay parameter value is used for determining the first threshold value; when a cell associated with the first signal and a cell to which the first PDCCH belongs respectively belong to different bands, the switching delay parameter value is predefined; and when a cell associated with the first signal and a cell to which the first PDCCH belongs belong to an identical band, the switching delay parameter value is equal to a delay value of BWP switching.

As one embodiment, the first PDCCH is used for determining a target SSB, multiple PRACH occasions correspond to the target SSB, and a PRACH occasion occupied by the first signal is a next PRACH occasion among the multiple PRACH occasions, a length of a time interval between the next PRACH occasion and the first PDCCH in a time domain being not less than the first threshold value.

As one embodiment, an initial delay parameter value is used for determining the first threshold value, and at least one of a frequency range to which the first signal belongs or a frequency range to which the first PDCCH belongs is used for determining the initial delay parameter value.

As one embodiment, the first PDCCH carries a first field, a value of the first field carried by the first PDCCH belongs to a first candidate value set, and the first candidate value set comprises multiple candidate values; and the first signal being associated with a cell other than the cell to which the first PDCCH belongs depends on the value of the first field carried by the first PDCCH being equal to a candidate value other than a target value in the first candidate value set, and the target value is one predefined candidate value in the first candidate value set.

As one embodiment, the first receiver 1201 monitors a second PDCCH in a target tie window, wherein the second PDCCH is used in response to the first signal; and the cell associated with the first signal is used for determining at least one of a duration of the target time window or a starting moment of the target time window.

As one embodiment, the first receiver 1201 receives a first information block, wherein the first information block is used for determining a power ramping step, the first PDCCH is used for determining a first count value, and the power ramping step and the first count value are used together for determining a transmission power value of the first signal.

## Embodiment 13

Embodiment 13 illustrates a structural block diagram of a processing device in a second node device of one embodiment, as shown in FIG. 13. In FIG. 13, a processing device 1300 of the second node device comprises a second transmitter 1301 and a second receiver 1302. The first transmitter 1301 comprises a transmitting device/receiving device 416 (comprising an antenna 460), a transmitting processor 415, and a controller/processor 440 in FIG. 4 of the present application; and the first receiver 1302 comprises a transmitting device/receiving device 416 (comprising an antenna 460), a receiving processor 412, and a controller/processor 440 in FIG. 4 of the present application.

In Embodiment 13, the second transmitter 1301 sends a first PDCCH; and the second receiver 1302 receives a first signal, the first PDCCH is used for triggering sending of the first signal, and the first signal carries a random access preamble sequence, wherein the first signal is associated with a cell other than a cell to which the first PDCCH belongs, a length of a time interval between the first PDCCH and the first signal in a time domain is not less than a first threshold value, and the first threshold value is greater than 0; a relationship between the cell associated with the first signal and the cell to which the first PDCCH belongs is used for determining the first threshold value; and the first threshold value is related to a first sub-carrier spacing, and a sub-carrier spacing of the first PDCCH and a sub-carrier spacing of the first signal are used together for determining the first sub-carrier spacing.

As one embodiment, a switching delay parameter value is used for determining the first threshold value; when a cell associated with the first signal and a cell to which the first PDCCH belongs respectively belong to different bands, the switching delay parameter value is predefined; and when a cell associated with the first signal and a cell to which the first PDCCH belongs belong to an identical band, the switching delay parameter value is equal to a delay value of BWP switching.

As one embodiment, the first PDCCH is used for determining a target SSB, multiple PRACH occasions correspond to the target SSB, and a PRACH occasion occupied by the first signal is a next PRACH occasion among the multiple PRACH occasions, a length of a time interval between the next PRACH occasion and the first PDCCH in a time domain being not less than the first threshold value.

As one embodiment, an initial delay parameter value is used for determining the first threshold value, and at least one of a frequency range to which the first signal belongs or a frequency range to which the first PDCCH belongs is used for determining the initial delay parameter value.

As one embodiment, the first PDCCH carries a first field, a value of the first field carried by the first PDCCH belongs to a first candidate value set, and the first candidate value set comprises multiple candidate values; and the first signal being associated with a cell other than the cell to which the first PDCCH belongs depends on the value of the first field carried by the first PDCCH being equal to a candidate value other than a target value in the first candidate value set, and the target value is one predefined candidate value in the first candidate value set.

As one embodiment, the second transmitter 1301 sends a second PDCCH in a target time window, wherein the second PDCCH is used in response to the first signal; and the cell associated with the first signal is used for determining at least one of a duration of the target time window or a starting moment of the target time window.

As one embodiment, the second transmitter 1301 sends a first information block, wherein the first information block is used for determining a power ramping step, the first PDCCH is used for determining a first count value, and the power ramping step and the first count value are used together for determining a transmission power value of the first signal.

Those ordinarily skilled in the art can understand that all or part of the steps in the above methods can be completed by instructing relevant hardware through a program, and the program can be stored in a computer-readable storage medium, such as a read-only memory, a hard disk or an optical disk, etc. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combination. The first node device or the second node device or UE or the terminal in the present application includes but is not limited to mobile phones, tablet computers, notebook computers, network access cards, low-power devices, eMTC devices, NB-IoT devices, vehicle-mounted communication devices, aircrafts, airplanes, drones, remotecontrolled aircrafts, and other wireless communication devices. A base station device or a base station or a network-side device in the present application includes but is not limited to macro cellular base stations, micro cellular base stations, home base stations, relay base stations, eNBs, gNBs, transmitter receiver points TRPs, relay satellites, satellite base stations, air base stations, and other wireless communication devices.

Those skilled in the art should understand that the present invention can be implemented in other specified forms without departing from its core or basic features. Therefore, the embodiments disclosed at present should be regarded as descriptive rather than restrictive in any way. The scope of the invention is determined by the appended claims rather than the preceding description, and all changes within their equivalent meanings and areas are deemed to be included therein.

## Claims

1. A first node device used in wireless communication, comprising:

   a first receiver receiving a first PDCCH, wherein the first PDCCH carries all or part of fields in a DCI format 1_0, and a value of a frequency domain resource assignment field included in DCI carried by the first PDCCH is equal to all "1";
   a first transmitter sending a first signal, wherein the first PDCCH is used for triggering sending of the first signal, and the first signal carries a random access preamble sequence,

wherein the first signal is associated with a cell other than a cell to which the first PDCCH belongs, and the first signal is used for obtaining timing advance for at least 1 cell other than the cell to which the first PDCCH belongs; a length of a time interval between the first PDCCH and the first signal in a time domain is not less than a first threshold value, the first threshold value is greater than 0, and the length of the time interval between the first PDCCH and the first signal in a time domain is a length of a time interval between the latest symbol of reception of the first PDCCH and the earliest symbol of transmission of the first signal; a relationship between the cell associated with the first signal and the cell to which the first PDCCH belongs is used for determining the first threshold value, and the relationship between the cell associated with the first signal and the cell to which the first PDCCH belongs comprises: whether the cell associated with the first signal and the cell to which the first PDCCH belongs are both serving cells; and the first threshold value is related to a first sub-carrier spacing, and a sub-carrier spacing of the first PDCCH and a sub-carrier spacing of the first signal are used together for determining the first sub-carrier spacing.

2. The first node device according to claim 1, wherein a switching delay parameter value is used for determining the first threshold value, and the first threshold value and the switching delay parameter value are linearly correlated; when the cell associated with the first signal and the cell to which the first PDCCH belongs respectively belong to different bands, the switching delay parameter value is equal to 0; and when the cell associated with the first signal and the cell to which the first PDCCH belongs belong to an identical band, the switching delay parameter value is equal to a delay value of BWP switching.

3. The first node device according to claim 1 or 2, wherein the first PDCCH is used for determining a target SSB, multiple PRACH occasions correspond to the target SSB, and a PRACH occasion occupied by the first signal is a next PRACH occasion among the multiple PRACH occasions, a length of a time interval between the next PRACH occasion and the first PDCCH in a time domain is not less than the first threshold value.

4. The first node device according to claim 3, wherein one field in a DCI format carried by the first PDCCH is used for explicitly or implicitly indicating an index value of the target SSB, and the multiple PRACH occasions are all associated with an index of the target SSB; and a number of the multiple PRACH occasions corresponding to the target SSB is configurable, and an association cycle between the multiple PRACH occasions and the target SSB is configurable.

5. The first node device according to any one of claims 1 to 4, wherein an initial delay parameter value is used for determining the first threshold value, the first threshold value and the initial delay parameter value are linearly correlated, and the initial delay parameter value is equal to 0.5 milliseconds or 0.25 milliseconds; and at least one of a frequency range to which the first signal belongs or a frequency range to which the first PDCCH belongs is used for determining the initial delay parameter value.

6. The first node device according to claim 5, wherein when the first signal belongs to a frequency range 1, the initial delay parameter value is equal to 0.5 milliseconds; when the first signal belongs to a frequency range 2, the initial delay parameter value is equal to 0.25 milliseconds;

or when the first PDCCH belongs to the frequency range 1, the initial delay parameter value is equal to 0.5 milliseconds; and when the first PDCCH belongs to the frequency range 2, the initial delay parameter value is equal to 0.25 milliseconds.

7. The first node device according to any one of claims 1 to 6, wherein the first PDCCH carries a first field, a value of the first field carried by the first PDCCH belongs to a first candidate value set, and the first candidate value set comprises multiple candidate values; and the first signal being associated with a cell other than the cell to which the first PDCCH belongs depends on the value of the first field carried by the first PDCCH being equal to a candidate value other than a target value in the first candidate value set, and the target value is one predefined candidate value in the first candidate value set.

8. The first node device according to claim 7, wherein a format used by DCI carried by the first PDCCH comprises the first field, and one piece of signaling or one parameter is used for configuring at least 1 reserved bit in the DCI carried by the first PDCCH to be used as the first field.

9. The first node device according to claim 7 or 8, wherein N1 is equal to a number of bits included in the first field carried by the first PDCCH, a number of candidate values included in the first candidate value set is equal to 2 to power of N1, and the target value is equal to 0; when the value of the first field carried by the first PDCCH is equal to the target value, the first signal is associated with the cell to which the first PDCCH belongs; otherwise, the first signal is associated with a cell other than the cell to which the first PDCCH belongs.

10. The first node device according to any one of claims 1 to 9, wherein the relationship between the cell associated with the first signal and the cell to which the first PDCCH belongs is used for determining a value of a parameter $\Delta_{BWPSwitching}$ used when the first threshold value is calculated;and the relationship between the cell associated with the first signal and the cell to which the first PDCCH belongs is used for determining the value of the parameter $\Delta_{LTM}$ used when the first threshold value is calculated, and the parameter $\Delta_{LTM}$ is a value of a parameter other than a parameter $N_{T,2}$, a parameter $\Delta_{BWPSwitching}$, a parameter $\Delta_{Delay}$ or a parameter $T_{switch}$.

11. The first node device according to any one of claims 1 to 10, wherein the first receiver receives a first information block, wherein the first information block is used for determining a power ramping step, the first PDCCH is used for determining a first count value, the power ramping step and the first count value are used together for determining a transmission power value of the first signal, and the power ramping step is equal to one of 0 dB, 2 dB, 4 dB, or 6 dB.

12. The first node device according to claim 11, wherein the first information block comprises all or part of LTM configuration information, the first information block comprises all or part of an IE "RACH-ConfigGeneric", and the first information block comprises a field "powerRampingStep".

13. The first node device according to claim 11 or 12, wherein the power ramping step is equal to a power ramping step of a PRACH configured for a cell other than the cell to which the first PDCCH belongs, and a transmission power value of the first signal is not greater than a maximum output power value at which a sender of the first signal is configured in the cell to which the first PDCCH belongs; and the first count value is used for retransmission counting of the PRACH.

14. The first node device according to any one of claims 11 to 13, wherein the transmission power value of the first signal is equal to a smaller value of a first upper limit value and a first power value, the first upper limit value is the maximum output power at which the sender of the first signal is configured, and the first power value and a product value between the power ramping step and a difference of the first count value minus 1 are linearly correlated.

15. The first node device according to any one of claims 1 to 14, wherein when the sub-carrier spacing of the first signal is equal to 1.25 kHz or 5 kHz, the first sub-carrier spacing is equal to 15 kHz; and when the sub-carrier spacing of the first signal is equal to a sub-carrier spacing other than 1.25 kHz or 5 kHz, the first sub-carrier spacing is equal to a smaller value of the sub-carrier spacing of the first PDCCH and the sub-carrier spacing of the first signal.

16. The first node device according to any one of claims 1 to 15, wherein the first threshold value and a target parameter value are linearly correlated; when a relationship between the first cell and the cell to which the first PDCCH belongs is a first relationship, the target parameter value is equal to a first candidate value; when the relationship between the first cell and the cell to which the first PDCCH belongs is a second relationship, the target parameter value is equal to a second candidate value; and the first candidate value and the second candidate value are not equal, the first candidate value is predefined, and the second candidate value is predefined or configurable, or is related to the capability of the sender of the first signal.

17. The first node device according to any one of claims 1 to 16, wherein the first signal is a PRACH, and the first signal is used for a random access procedure and an LTM procedure; and the cell associated with the first signal is a cell or cell group where a corresponding index value or identifier value and a time-frequency resource and/or sequence occupied by the first signal are both configured or indicated in the first PDCCH.

18. The first node device according to any one of claims 1 to 17, wherein the first threshold value and a preparation delay parameter value are linearly correlated, and the preparation delay parameter value is equal to a duration of N2 symbols; the first sub-carrier spacing is one of Q1 candidate sub-carrier spacings, N2 is one of Q1 candidate number values, the Q1 candidate sub-carrier spacings and the Q1 candidate number values are in one-to-one correspondence, and Q1 is a positive integer greater than 1; the N2 is equal to a candidate number value corresponding to the first sub-carrier spacing among the Q1 candidate number values, any one of the Q1 candidate number values is a positive integer, and the Q1 is a positive integer greater than 1; and a one-to-one correspondence relationship between the Q1 candidate sub-carrier spacings and the Q1 candidate number values is related to the capability of the sender of the first signal.

19. A second node device used in wireless communication, comprising:

a second transmitter sending a first PDCCH, wherein the first PDCCH carries all or part of fields in a DCI format 1_0, and a value of a frequency domain resource assignment field included in DCI carried by the first PDCCH is equal to all "1";

and a second receiver receiving a first signal, wherein the first PDCCH is used for triggering sending of the first signal, and the first signal carries a random access preamble sequence,

wherein the first signal is associated with a cell other than a cell to which the first PDCCH belongs, and the first signal is used for obtaining timing advance for at least 1 cell other than the cell to which the first PDCCH belongs; a length of a time interval between the first PDCCH and the first signal in a time domain is not less than a first threshold value, the first threshold value is greater than 0, and the length of the time interval between the first PDCCH and the first signal in a time domain is a length of a time interval between the latest symbol of reception of the first PDCCH and the earliest symbol of transmission of the first signal; a relationship between the cell associated with the first signal and the cell to which the first PDCCH belongs is used for determining the first threshold value, and the relationship between the cell associated with the first signal and the cell to which the first PDCCH belongs comprises: whether the cell associated with the first signal and the cell to which the first PDCCH belongs are both serving cells; and the first threshold value is related to a first sub-carrier spacing, and a sub-carrier spacing of the first PDCCH and a sub-carrier spacing of the first signal are used together for determining the first sub-carrier spacing.

20. The second node device according to claim 19, wherein a switching delay parameter value is used for determining the first threshold value, and the first threshold value and the switching delay parameter value are linearly correlated; when the cell associated with the first signal and the cell to which the first PDCCH belongs respectively belong to different bands, the switching delay parameter value is equal to 0; and when the cell associated with the first signal and the cell to which the first PDCCH belongs belong to an identical band, the switching delay parameter value is equal to a delay value of BWP switching.

21. The second node device according to claim 19 or 20, wherein the first PDCCH is used for determining a target SSB, multiple PRACH occasions correspond to the target SSB, and a PRACH occasion occupied by the first signal is a next PRACH occasion among the multiple PRACH occasions, a length of a time interval between the next PRACH occasion and the first PDCCH in a time domain is not less than the first threshold value.

22. The second node device according to claim 21, wherein one field in a DCI format carried by the first PDCCH is used for explicitly or implicitly indicating an index value of the target SSB, and the multiple PRACH occasions are all associated with an index of the target SSB; and a number of the multiple PRACH occasions corresponding to the target SSB is configurable, and an association cycle between the multiple PRACH occasions and the target SSB is configurable.

23. The second node device according to any one of claims 19 to 22, wherein an initial delay parameter value is used for determining the first threshold value, the first threshold value and the initial delay parameter value are linearly correlated, and the initial delay parameter value is equal to 0.5 milliseconds or 0.25 milliseconds; and at least one of a frequency range to which the first signal belongs or a frequency range to which the first PDCCH belongs is used for determining the initial delay parameter value.

24. The second node device according to claim 23, wherein when the first signal belongs to a frequency range 1, the initial delay parameter value is equal to 0.5 milliseconds; when the first signal belongs to a frequency range 2, the initial delay parameter value is equal to 0.25 milliseconds;

or when the first PDCCH belongs to the frequency range 1, the initial delay parameter value is equal to 0.5 milliseconds; and when the first PDCCH belongs to the frequency range 2, the initial delay parameter value is equal to 0.25 milliseconds.

25. The second node device according to any one of claims 19 to 24, wherein the first PDCCH carries a first field, a value of the first field carried by the first PDCCH belongs to a first candidate value set, and the first candidate value set comprises multiple candidate values; and the first signal being associated with a cell other than the cell to which the first PDCCH belongs depends on the value of the first field carried by the first PDCCH being equal to a candidate value other than a target value in the first candidate value set, and the target value is one predefined candidate value in the first candidate value set.

26. The second node device according to claim 25, wherein a format used by DCI carried by the first PDCCH comprises the first field, and one piece of signaling or one parameter is used for configuring at least 1 reserved bit in the DCI carried by the first PDCCH to be used as the first field.

**27.** The second node device according to claim 25 or 26, wherein N1 is equal to a number of bits included in the first field carried by the first PDCCH, a number of candidate values included in the first candidate value set is equal to 2 to power of N1, and the target value is equal to 0; when the value of the first field carried by the first PDCCH is equal to the target value, the first signal is associated with the cell to which the first PDCCH belongs; otherwise, the first signal is associated with a cell other than the cell to which the first PDCCH belongs.

**28.** The second node device according to any one of claims 19 to 27, wherein the relationship between the cell associated with the first signal and the cell to which the first PDCCH belongs is used for determining a value of a parameter $\Delta_{BWPSwitching}$ used when the first threshold value is calculated;and the relationship between the cell associated with the first signal and the cell to which the first PDCCH belongs is used for determining the value of the parameter $\Delta_{LTM}$ used when the first threshold value is calculated, and the parameter $\Delta_{LTM}$ is a value of a parameter other than a parameter $N_{T,2}$, a parameter $\Delta_{BWPSwitching}$, a parameter $\Delta_{Delay}$ or a parameter $T_{switch}$.

**29.** The second node device according to any one of claims 19 to 28, wherein the second transmitter sends a first information block, wherein the first information block is used for determining a power ramping step, the first PDCCH is used for determining a first count value, the power ramping step and the first count value are used together for determining a transmission power value of the first signal, and the power ramping step is equal to one of 0 dB, 2 dB, 4 dB, or 6 dB.

**30.** The second node device according to claim 29, wherein the first information block comprises all or part of LTM configuration information, the first information block comprises all or part of an IE "RACH-ConfigGeneric", and the first information block comprises a field "powerRampingStep".

**31.** The second node device according to claim 29 or 30, wherein the power ramping step is equal to a power ramping step of a PRACH configured for a cell other than the cell to which the first PDCCH belongs, and a transmission power value of the first signal is not greater than a maximum output power value at which a sender of the first signal is configured in the cell to which the first PDCCH belongs; and the first count value is used for retransmission counting of the PRACH.

**32.** The second node device according to any one of claims 29 to 31, wherein the transmission power value of the first signal is equal to a smaller value of a first upper limit value and a first power value, the first upper limit value is the maximum output power at which the sender of the first signal is configured, and the first power value and a product value between the power ramping step and a difference of the first count value minus 1 are linearly correlated.

**33.** The second node device according to any one of claims 19 to 32, wherein when the sub-carrier spacing of the first signal is equal to 1.25 kHz or 5 kHz, the first sub-carrier spacing is equal to 15 kHz; and when the sub-carrier spacing of the first signal is equal to a sub-carrier spacing other than 1.25 kHz or 5 kHz, the first sub-carrier spacing is equal to a smaller value of the sub-carrier spacing of the first PDCCH and the sub-carrier spacing of the first signal.

**34.** The second node device according to any one of claims 19 to 33, wherein the first threshold value and a target parameter value are linearly correlated; when a relationship between the first cell and the cell to which the first PDCCH belongs is a first relationship, the target parameter value is equal to a first candidate value; when the relationship between the first cell and the cell to which the first PDCCH belongs is a second relationship, the target parameter value is equal to a second candidate value; and the first candidate value and the second candidate value are not equal, the first candidate value is predefined, and the second candidate value is predefined or configurable, or is related to the capability of the sender of the first signal.

**35.** The second node device according to any one of claims 19 to 34, wherein the first signal is a PRACH, and the first signal is used for a random access procedure and an LTM procedure; and the cell associated with the first signal is a cell or cell group where a corresponding index value or identifier value and a time-frequency resource and/or sequence occupied by the first signal are both configured or indicated in the first PDCCH.

**36.** The second node device according to any one of claims 19 to 35, wherein the first threshold value and a preparation delay parameter value are linearly correlated, and the preparation delay parameter value is equal to a duration of N2 symbols; the first sub-carrier spacing is one of Q1 candidate sub-carrier spacings, N2 is one of Q1 candidate number values, the Q1 candidate sub-carrier spacings and the Q1 candidate number values are in one-to-one correspondence, and Q1 is a positive integer greater than 1; the N2 is equal to a candidate number value corresponding to the first sub-carrier spacing among the Q1 candidate number values, any one of the Q1 candidate number values is a positive integer, and the Q1 is a positive integer greater than 1; and a one-to-one correspondence relationship between the Q1 candidate sub-carrier spacings and the Q1 candidate number values is related to the capability of the sender of the first signal.

37. A method used in a first node for wireless communication, comprising:

receiving a first PDCCH, wherein the first PDCCH carries all or part of fields in a DCI format 1_0, and a value of a frequency domain resource assignment field included in DCI carried by the first PDCCH is equal to all "1"; and sending a first signal, wherein the first PDCCH is used for triggering sending of the first signal, and the first signal carries a random access preamble sequence, wherein the first signal is associated with a cell other than a cell to which the first PDCCH belongs, and the first signal is used for obtaining timing advance for at least 1 cell other than the cell to which the first PDCCH belongs; a length of a time interval between the first PDCCH and the first signal in a time domain is not less than a first threshold value, the first threshold value is greater than 0, and the length of the time interval between the first PDCCH and the first signal in a time domain is a length of a time interval between the latest symbol of reception of the first PDCCH and the earliest symbol of transmission of the first signal; a relationship between the cell associated with the first signal and the cell to which the first PDCCH belongs is used for determining the first threshold value, and the relationship between the cell associated with the first signal and the cell to which the first PDCCH belongs comprises: whether the cell associated with the first signal and the cell to which the first PDCCH belongs are both serving cells; and the first threshold value is related to a first sub-carrier spacing, and a sub-carrier spacing of the first PDCCH and a sub-carrier spacing of the first signal are used together for determining the first sub-carrier spacing.

38. The method used in a first node according to claim 37, wherein a switching delay parameter value is used for determining the first threshold value, and the first threshold value and the switching delay parameter value are linearly correlated; when the cell associated with the first signal and the cell to which the first PDCCH belongs respectively belong to different bands, the switching delay parameter value is equal to 0; and when the cell associated with the first signal and the cell to which the first PDCCH belongs belong to an identical band, the switching delay parameter value is equal to a delay value of BWP switching.

39. The method used in a first node according to claim 37 or 38, wherein the first PDCCH is used for determining a target SSB, multiple PRACH occasions correspond to the target SSB, and a PRACH occasion occupied by the first signal is a next PRACH occasion among the multiple PRACH occasions, a length of a time interval between the next PRACH occasion and the first PDCCH in a time domain is not less than the first threshold value.

40. The method used in a first node according to claim 39, wherein one field in a DCI format carried by the first PDCCH is used for explicitly or implicitly indicating an index value of the target SSB, and the multiple PRACH occasions are all associated with an index of the target SSB; and a number of the multiple PRACH occasions corresponding to the target SSB is configurable, and an association cycle between the multiple PRACH occasions and the target SSB is configurable.

41. The method used in a first node according to any one of claims 37 to 40, wherein an initial delay parameter value is used for determining the first threshold value, the first threshold value and the initial delay parameter value are linearly correlated, and the initial delay parameter value is equal to 0.5 milliseconds or 0.25 milliseconds; and at least one of a frequency range to which the first signal belongs or a frequency range to which the first PDCCH belongs is used for determining the initial delay parameter value.

42. The method used in a first node according to claim 41, wherein when the first signal belongs to a frequency range 1, the initial delay parameter value is equal to 0.5 milliseconds; when the first signal belongs to a frequency range 2, the initial delay parameter value is equal to 0.25 milliseconds; or when the first PDCCH belongs to the frequency range 1, the initial delay parameter value is equal to 0.5 milliseconds; and when the first PDCCH belongs to the frequency range 2, the initial delay parameter value is equal to 0.25 milliseconds.

43. The method used in a first node according to any one of claims 37 to 42, wherein the first PDCCH carries a first field, a value of the first field carried by the first PDCCH belongs to a first candidate value set, and the first candidate value set comprises multiple candidate values; and the first signal being associated with a cell other than the cell to which the first PDCCH belongs depends on the value of the first field carried by the first PDCCH being equal to a candidate value other than a target value in the first candidate value set, and the target value is one predefined candidate value in the first candidate value set.

44. The method used in a first node according to claim 43, wherein a format used by DCI carried by the first PDCCH comprises the first field, and one piece of signaling or one parameter is used for configuring at least 1 reserved bit in the DCI carried by the first PDCCH to be used as the first field.

45. The method used in a first node according to claim 43 or 44, wherein N1 is equal to a number of bits included in the first field carried by the first PDCCH, a number of candidate valuesincluded in the first candidate value set is equal to 2 to power of N1, and the target value is equal to 0; when the value of the first field carried by the first PDCCH is equal to the target value, the first signal is associated with the cell to which the first PDCCH belongs; otherwise, the first signal is associated with a cell other than the cell to which the first PDCCH belongs.

46. The method used in a first node according to any one of claims 37 to 45, wherein the relationship between the cell associated with the first signal and the cell to which the first PDCCH belongs is used for determining a value of a parameter $\Delta_{BWPSwitching}$ used when the first threshold value is calculated;and the relationship between the cell associated with the first signal and the cell to which the first PDCCH belongs is used for determining the value of the parameter $\Delta_{LTM}$ used when the first threshold value is calculated, and the parameter $\Delta_{LTM}$ is a value of a parameter other than a parameter $N_{T,2}$, a parameter $\Delta_{BWPSwitching}$, a parameter $\Delta_{Delay}$ or a parameter $T_{switch}$.

47. The method used in a first node according to any one of claims 37 to 46, comprising:

receiving a first information block,
wherein the first information block is used for determining a power ramping step, the first PDCCH is used for determining a first count value, the power ramping step and the first count value are used together for determining a transmission power value of the first signal, and the power ramping step is equal to one of 0 dB, 2 dB, 4 dB, or 6 dB.

48. The method used in a first node according to claim 47, wherein the first information block comprises all or part of LTM configuration information, the first information block comprises all or part of an IE "RACH-ConfigGeneric", and the first information block comprises a field "powerRampingStep".

49. The method used in a first node according to claim 47 or 48, wherein the power ramping step is equal to a power ramping step of a PRACH configured for a cell other than the cell to which the first PDCCH belongs, and a transmission power value of the first signal is not greater than a maximum output power value at which a sender of the first signal is configured in the cell to which the first PDCCH belongs; and the first count value is used for retransmission counting of the PRACH.

50. The method used in a first node according to any one of claims 47 to 49, wherein the transmission power value of the first signal is equal to a smaller value of a first upper limit value and a first power value, the first upper limit value is the maximum output power at which the sender of the first signal is configured, and the first power value and a product value between the power ramping step and a difference of the first count value minus 1 are linearly correlated.

51. The method used in a first node according to any one of claims 37 to 50, wherein when the sub-carrier spacing of the first signal is equal to 1.25 kHz or 5 kHz, the first sub-carrier spacing is equal to 15 kHz; and when the sub-carrier spacing of the first signal is equal to a sub-carrier spacing other than 1.25 kHz or 5 kHz, the first sub-carrier spacing is equal to a smaller value of the sub-carrier spacing of the first PDCCH and the sub-carrier spacing of the first signal.

52. The method used in a first node according to any one of claims 37 to 51, wherein the first threshold value and a target parameter value are linearly correlated; when a relationship between the first cell and the cell to which the first PDCCH belongs is a first relationship, the target parameter value is equal to a first candidate value; when the relationship between the first cell and the cell to which the first PDCCH belongs is a second relationship, the target parameter value is equal to a second candidate value; and the first candidate value and the second candidate value are not equal, the first candidate value is predefined, and the second candidate value is predefined or configurable, or is related to the capability of the sender of the first signal.

53. The method used in a first node according to any one of claims 37 to 52, wherein the first signal is a PRACH, and the first signal is used for a random access procedure and an LTM procedure; and the cell associated with the first signal is a cell or cell group where a corresponding index value or identifier value and a time-frequency resource and/or sequence occupied by the first signal are both configured or indicated in the first PDCCH.

54. The method used in a first node according to any one of claims 37 to 53, wherein the first threshold value and a preparation delay parameter value are linearly correlated, and the preparation delay parameter value is equal to a duration of N2 symbols; the first sub-carrier spacing is one of Q1 candidate sub-carrier spacings, N2 is one of Q1 candidate number values, the Q1 candidate sub-carrier spacings and the Q1 candidate number values are in one-to-one correspondence, and Q1 is a positive integer greater than 1; the N2 is equal to a candidate number value corresponding to the first sub-carrier spacing among the Q1 candidate number values, any one of the Q1 candidate number values is a positive integer, and the Q1 is a positive integer greater than 1; and a one-to-one correspondence relationship between the Q1 candidate sub-carrier spacings and the Q1 candidate number values is related to the capability of the sender of the first signal.

55. A method used in a second node for wireless communication, comprising:

sending a first PDCCH, wherein the first PDCCH carries all or part of fields in a DCI format 1_0, and a value of a frequency domain resource assignment field included in DCI carried by the first PDCCH is equal to all "1";
and receiving a first signal, wherein the first PDCCH is used for triggering sending of the first signal, and the first signal carries a random access preamble sequence,
wherein the first signal is associated with a cell other than a cell to which the first PDCCH belongs, and the first signal is used for obtaining timing advance for at least 1 cell other than the cell to which the first PDCCH belongs; a length of a time interval between the first PDCCH and the first signal in a time domain is not less than a first threshold value, the first threshold value is greater than 0, and the length of the time interval between the first PDCCH and the first signal in a time domain is a length of a time interval between the latest symbol of reception of the first PDCCH and the earliest symbol of transmission of the first signal; a relationship between the cell associated with the first signal and the cell to which the first PDCCH belongs is used for determining the first threshold value, and the relationship between the cell associated with the first signal and the cell to which the first PDCCH belongs comprises: whether the cell associated with the first signal and the cell to which the first PDCCH belongs are both serving cells; and the first threshold value is related to a first sub-carrier spacing, and a sub-carrier spacing of the first PDCCH and a sub-carrier spacing of the first signal are used together for determining the first sub-carrier spacing.

56. The method used in a second node according to claim 55, wherein a switching delay parameter value is used for determining the first threshold value, and the first threshold value and the switching delay parameter value are linearly correlated; when the cell associated with the first signal and the cell to which the first PDCCH belongs respectively belong to different bands, the switching delay parameter value is equal to 0; and when the cell associated with the first signal and the cell to which the first PDCCH belongs belong to an identical band, the switching delay parameter value is equal to a delay value of BWP switching.

57. The method used in a second node according to claim 55 or 56, wherein the first PDCCH is used for determining a target SSB, multiple PRACH occasions correspond to the target SSB, and a PRACH occasion occupied by the first signal is a next PRACH occasion among the multiple PRACH occasions, a length of a time interval between the next PRACH occasion and the first PDCCH in a time domain is not less than the first threshold value.

58. The method used in a second node according to claim 57, wherein one field in a DCI format carried by the first PDCCH is used for explicitly or implicitly indicating an index value of the target SSB, and the multiple PRACH occasions are all associated with an index of the target SSB; and a number of the multiple PRACH occasions corresponding to the target SSB is configurable, and an association cycle between the multiple PRACH occasions and the target SSB is configurable.

59. The method used in a second node according to any one of claims 55 to 58, wherein an initial delay parameter value is used for determining the first threshold value, the first threshold value and the initial delay parameter value are linearly correlated, and the initial delay parameter value is equal to 0.5 milliseconds or 0.25 milliseconds; and at least one of a frequency range to which the first signal belongs or a frequency range to which the first PDCCH belongs is used for determining the initial delay parameter value.

60. The method used in a second node according to claim 59, wherein when the first signal belongs to a frequency range 1, the initial delay parameter value is equal to 0.5 milliseconds; when the first signal belongs to a frequency range 2, the initial delay parameter value is equal to 0.25 milliseconds;

or when the first PDCCH belongs to the frequency range 1, the initial delay parameter value is equal to 0.5 milliseconds; and when the first PDCCH belongs to the frequency range 2, the initial delay parameter value is equal to 0.25 milliseconds.

61. The method used in a second node according to any one of claims 55 to 60, wherein the first PDCCH carries a first field, a value of the first field carried by the first PDCCH belongs to a first candidate value set, and the first candidate value set comprises multiple candidate values; and the first signal being associated with a cell other than the cell to which the first PDCCH belongs depends on the value of the first field carried by the first PDCCH being equal to a candidate value other than a target value in the first candidate value set, and the target value is one predefined candidate value in the first candidate value set.

62. The method used in a second node according to claim 61, wherein a format used by DCI carried by the first PDCCH comprises the first field, and one piece of signaling or one parameter is used for configuring at least 1 reserved bit in the DCI carried by the first PDCCH to be used as the first field.

63. The method used in a second node according to claim 61 or 62, wherein N1 is equal to a number of bits included in the first field carried by the first PDCCH, a number of candidate values included in the first candidate value set is equal to 2 to power of N1, and the target value is equal to 0; when the value of the first field carried by the first PDCCH is equal to the target value, the first signal is associated with the cell to which the first PDCCH belongs; otherwise, the first signal is associated with a cell other than the cell to which the first PDCCH belongs.

64. The method used in a second node according to any one of claims 55 to 63, wherein the relationship between the cell associated with the first signal and the cell to which the first PDCCH belongs is used for determining a value of a parameter $\Delta_{BWPSwitching}$ used when the first threshold value is calculated; and the relationship between the cell associated with the first signal and the cell to which the first PDCCH belongs is used for determining the value of the parameter $\Delta_{LTM}$ used when the first threshold value is calculated, and the parameter $\Delta_{LTM}$ is a value of a parameter other than a parameter $N_{T,2}$, a parameter $\Delta_{BWPSwitching}$, a parameter $\Delta_{Delay}$ or a parameter $T_{switch}$.

65. The method used in a second node according to any one of claims 55 to 64, comprising:

sending a first information block,
wherein the first information block is used for determining a power ramping step, the first PDCCH is used for determining a first count value, the power ramping step and the first count value are used together for determining a transmission power value of the first signal, and the power ramping step is equal to one of 0 dB, 2 dB, 4 dB, or 6 dB.

66. The method used in a second node according to claim 65, wherein the first information block comprises all or part of LTM configuration information, the first information block comprises all or part of an IE "RACH-ConfigGeneric", and the first information block comprises a field "powerRampingStep".

67. The method used in a second node according to claim 65 or 66, wherein the power ramping step is equal to a power ramping step of a PRACH configured for a cell other than the cell to which the first PDCCH belongs, and a transmission power value of the first signal is not greater than a maximum output power value at which a sender of the first signal is configured in the cell to which the first PDCCH belongs; and the first count value is used for retransmission counting of the PRACH.

68. The method used in a second node according to any one of claims 65 to 67, wherein the transmission power value of the first signal is equal to a smaller value of a first upper limit value and a first power value, the first upper limit value is the maximum output power at which the sender of the first signal is configured, and the first power value and a product value between the power ramping step and a difference of the first count value minus 1 are linearly correlated.

69. The method used in a second node according to any one of claims 55 to 68, wherein when the sub-carrier spacing of the first signal is equal to 1.25 kHz or 5 kHz, the first sub-carrier spacing is equal to 15 kHz; and when the sub-carrier spacing of the first signal is equal to a sub-carrier spacing other than 1.25 kHz or 5 kHz, the first sub-carrier spacing is equal to a smaller value of the sub-carrier spacing of the first PDCCH and the sub-carrier spacing of the first signal.

70. The method used in a second node according to any one of claims 55 to 69, wherein the first threshold value and a target parameter value are linearly correlated; when a relationship between the first cell and the cell to which the first PDCCH belongs is a first relationship, the target parameter value is equal to a first candidate value; when the relationship between the first cell and the cell to which the first PDCCH belongs is a second relationship, the target parameter value is equal to a second candidate value; and the first candidate value and the second candidate value are not equal, the first candidate value is predefined, and the second candidate value is predefined or configurable, or is related to the capability of the sender of the first signal.

71. The method used in a second node according to any one of claims 55 to 70, wherein the first signal is a PRACH, and the first signal is used for a random access procedure and an LTM procedure; and the cell associated with the first signal is a cell or cell group where a corresponding index value or identifier value and a time-frequency resource and/or sequence occupied by the first signal are both configured or indicated in the first PDCCH.

72. The method used in a second node according to any one of claims 55 to 71, wherein the first threshold value and a preparation delay parameter value are linearly correlated, and the preparation delay parameter value is equal to a duration of N2 symbols; the first sub-carrier spacing is one of Q1 candidate sub-carrier spacings, N2 is one of Q1 candidate number values, the Q1 candidate sub-carrier spacings and the Q1 candidate number values are in one-to-one correspondence, and Q1 is a positive integer greater than 1; the N2 is equal to a candidate number value corresponding to the first sub-carrier spacing among the Q1 candidate number values, any one of the Q1 candidate number values is a positive integer, and the Q1 is a positive integer greater than 1; and a one-to-one correspondence relationship between the Q1 candidate sub-carrier spacings and the Q1 candidate number values is related to the capability of the sender of the first signal.

FIG. 1

FIG. 2

FIG. 3

FIG. 4

FIG. 5

FIG. 6

FIG. 7

FIG. 8

| First candidate value set | Corresponding cell |
|---|---|
| Target value | A cell to which a first PDCCH belongs |
| Candidate value #1 | Cell #1 |
| Candidate value #2 | Cell #2 |
| Candidate value #3 | Cell #3 |
| Candidate value #4 | Cell #4 |
| ...... | ...... |
| Candidate value #C1 | Cell #C1 |
| Reserved value | N/A |
| Reserved value | N/A |

FIG. 9

First signal    Second PDCCH

Time

Target time
window

FIG. 10

Power

Power
ramping
step

......

Time

Initial
transmission

First
retransmission

Second
retransmission

FIG. 11

1200

First node
device

First receiver
1201

First transmitter
1202

FIG. 12

1300

Second
node device

Second transmitter
1301

Second receiver
1302

FIG. 13

## INTERNATIONAL SEARCH REPORT

| International application No. |
| --- |
| **PCT/CN2024/085765** |

| A. | CLASSIFICATION OF SUBJECT MATTER |
| --- | --- |
| | H04W 72/0453(2023.01)i;  H04L 5/00(2006.01)i |

According to International Patent Classification (IPC) or to both national classification and IPC

| B. | FIELDS SEARCHED |
| --- | --- |

Minimum documentation searched (classification system followed by classification symbols)

IPC：H04W H04L

Documentation searched other than minimum documentation to the extent that such documents are included in the fields searched

Electronic data base consulted during the international search (name of data base and, where practicable, search terms used)

CNTXT, ENTXT, WPABS, VCN, DWPI, CNKI, 3GPP: PDCCH, 小区, 基站, 不同, 之外, 子载波间隔, 随机接入, 前导, DCI, 定时提前, 时间间隔, 阈值, 门限, 时延, 频带, 切换, Cell?, BS, different, subcarrier spacing, SCS, random access, preamble, timing advance, threshold, latency, band, handover , SSB

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113891490 A (SHANGHAI LANGBO COMMUNICATION TECHNOLOGY CO., LTD.) 04 January 2022 (2022-01-04) <br> description, paragraphs 0080-0132, and figure 1 | 1-72 |
| A | CN 111082912 A (ZTE CORP.) 28 April 2020 (2020-04-28) <br> entire document | 1-72 |
| A | WO 2021227823 A1 (QUECTEL WIRELESS SOLUTIONS CO., LTD.) 18 November 2021 (2021-11-18) <br> entire document | 1-72 |
| A | WO 2022029968 A1 (NTT DOCOMO, INC.) 10 February 2022 (2022-02-10) <br> entire document | 1-72 |
| A | QUALCOMM INC. "R1-2000983 CR for Default QCL Assumption for Rel. 16 Cross-Carrier Scheduling" <br> *3GPP TSG-RAN WG1 #100-E.* 06 March 2020 (2020-03-06), <br> entire document | 1-72 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 July 2024** | **17 July 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2024/085765** |

| C. | DOCUMENTS CONSIDERED TO BE RELEVANT | |
|---|---|---|
| Category* | Citation of document, with indication, where appropriate, of the relevant passages | Relevant to claim No. |
| A | VIVO. "R1-2000348 Remaining Issues on Aperiodic CSI-RS Triggering" *3GPP TSG RAN WG1 #100*, 06 March 2020 (2020-03-06), entire document | 1-72 |

Form PCT/ISA/210 (second sheet) (July 2022)

**INTERNATIONAL SEARCH REPORT**
Information on patent family members

International application No.

**PCT/CN2024/085765**

| Patent document cited in search report | | | Publication date (day/month/year) | Patent family member(s) | | | Publication date (day/month/year) |
|---|---|---|---|---|---|---|---|
| CN | 113891490 | A | 04 January 2022 | CN | 112054833 | A | 08 December 2020 |
| | | | | WO | 2020244385 | A1 | 10 December 2020 |
| | | | | US | 2022086918 | A1 | 17 March 2022 |
| | | | | CN | 117915359 | A | 19 April 2024 |
| CN | 111082912 | A | 28 April 2020 | US | 2024106606 | A1 | 28 March 2024 |
| | | | | EP | 4044489 | A1 | 17 August 2022 |
| | | | | EP | 4044489 | A4 | 23 November 2022 |
| | | | | CA | 3154532 | A1 | 15 April 2021 |
| | | | | WO | 2021068807 | A1 | 15 April 2021 |
| WO | 2021227823 | A1 | 18 November 2021 | CN | 112437489 | A | 02 March 2021 |
| WO | 2022029968 | A1 | 10 February 2022 | EP | 4195811 | A1 | 14 June 2023 |
| | | | | EP | 4195811 | A4 | 08 May 2024 |

Form PCT/ISA/210 (patent family annex) (July 2022)